# EUROPEAN PATENT APPLICATION

(11) **EP 4 354 948 A1**
(43) Date of publication of application: **17.04.2024**
(21) Application number: 22841189.8
(22) Date of filing: 29.06.2022
(51) Int. Cl.: H04W 28/02, H04N 21/63

(54) **COMMUNICATION METHOD, DEVICE AND SYSTEM**

(30) Priority: 13.07.2021 CN 202110790888
(71) Applicant: Huawei Technologies Co., Ltd., Shenzhen, Guangdong 518129 (CN)
(72) Inventor: ZONG, Zaifeng, Shenzhen, Guangdong 518129 (CN); ZHU, Fenqin, Shenzhen, Guangdong 518129 (CN)
(74) Representative: Pfenning, Meinig & Partner mbB
(86) International application number: PCT/CN2022/102224
(87) International publication number: WO 2023/284551

(57) **Abstract**

This application provides a communication method, apparatus, and system. The method may include: A session management network element obtains a first rule, where the first rule includes a quality of service QoS parameter corresponding to a frame type of an application. The session management network element sends first indication information to a user plane network element according to the first rule. The first indication information indicates the user plane network element to determine, based on the frame type, a QoS flow identifier QFI corresponding to a data packet of the application. The service flow is a service flow of the application. The data packet of the application is encapsulated in a first data packet, and the first data packet includes the frame type. In this way, the user plane network element can determine, based on the frame type of the application, a QoS flow corresponding to the data packet of the application, so that distinguishing processing can be performed on the data packet based on the frame type of the data packet, to meet transmission requirements of data packets of different frame types.

## Description

This application claims priority to Chinese Patent Application No. 202110790888.3, filed with the China National Intellectual Property Administration on July 13, 2021 and entitled "COMMUNICATION METHOD, APPARATUS, AND SYSTEM", which is incorporated herein by reference in its entirety.

### TECHNICAL FIELD

This application relates to the communication field, and more specifically, to a communication method, apparatus, and system.

### BACKGROUND

With rapid development of a data network, traffic in the network presents explosive growth, and a network bandwidth and a data transmission speed are increasingly high. Therefore, burst data may occur in a data transmission process. The burst data causes a sudden surge in a queue, resulting in great impact on the network. When a plurality of burst data packets of a user simultaneously reach a base station, the base station may fail to process all the data packets at the moment, resulting in a deteriorated user experience.

### SUMMARY

This application provides a communication method, apparatus, and system, to improve user experience by performing distinguishing processing on different types of data packets.

According to a first aspect, a communication method is provided. The method includes: A session management network element obtains a first rule, where the first rule includes a quality of service (quality of service, QoS) parameter corresponding to a frame type of an application. The session management network element sends first indication information to a user plane network element based on the first rule. The first indication information indicates the user plane network element to determine, based on the frame type, a QoS flow identifier (QoS flow ID, QFI) corresponding to a data packet of the application. The data packet of the application is encapsulated in a first data packet. The first data packet includes the frame type.

It should be understood that the first indication information herein may, for example, correspond to indication information #1 in Description of Embodiments.

In a specific implementation, the first indication information includes the frame type and a QFI corresponding to the frame type. In other words, the first indication information may be a correspondence between the frame type and the QFI. Further, the first indication information may be included in a packet detection rule (packet detection rule, PDR). Correspondingly, the QFI and the frame type are included in the PDR. Correspondingly, after receiving the first indication information, the user plane network element locally stores the correspondence between the frame type and the QFI, so that after obtaining, from the first data packet, the frame type corresponding to the application, the user plane network element may determine, based on the correspondence, the QFI corresponding to the frame type.

Based on the foregoing technical solution, the user plane network element is indicated to determine, based on the frame type of the application, a QoS flow corresponding to the data packet of the application, so that distinguishing processing can be performed on the data packet based on the frame type of the data packet (in other words, different QoS processing can be performed for different types of frames), to meet different transmission requirements of different frame types, thereby improving user experience. This avoids a case in which a network cannot distinguish between different types of data packets for processing, and consequently, a smooth user experience cannot be ensured in some cases, for example, in the case of network congestion.

In a possible implementation, the session management network element receives the first rule from a policy control network element. For example, the policy control network element receives application information of the application from an application function network element or a multi-access mobile computing platform. The application information includes the frame type corresponding to the application and a QoS requirement. It should be understood that the application information may include a plurality of different frame types of the application and different QoS requirements corresponding to different frame types. The policy control network element generates the first rule based on the application information of the application, and sends the first rule to the session management network element. The first rule includes the QoS parameter corresponding to the frame type. The QoS parameter is determined based on the QoS requirement. It should be noted that the application information of the application may include QoS requirements corresponding to different service flows of the application, and different service flows correspond to different frame types. The policy control network element may determine, based on the QoS requirements corresponding to different service flows, QoS parameters corresponding to different service flows.

In another possible implementation, the session management network element determines the first rule based on a local configuration. In other words, the QoS parameter corresponding to the frame type of the application may be configured for the session management network element in a pre-configuration manner.

The first rule herein may be, for example, a policy and charging control (policy and charging control, PCC) rule. The first data packet herein includes the frame type. In other words, the first data packet carries the frame type. For example, the frame type is carried in a tunnel header or an extension header in the first data packet.

With reference to the first aspect, in some implementations of the first aspect, the data packet of the application is transmitted through a first tunnel. The first data packet includes a tunnel header of the first tunnel. The tunnel header of the first tunnel includes the frame type. That the first indication information indicates the user plane network element to determine, based on the frame type, a quality of service QoS flow identifier QFI corresponding to a data packet of the application includes: The first indication information indicates the user plane network element to determine the QFI based on the frame type in the tunnel header of the first tunnel. It should be understood that the data packet of the application herein may be a data packet of a service flow of the application.

In other words, the user plane network element receives or is to receive the data packet of the application through the first tunnel. The first tunnel herein is, for example, a tunnel between an application server and the user plane network element, or a tunnel between a multi-access edge computing platform and the user plane network element. The tunnel herein may be referred to as an N6 tunnel in some scenarios.

In this solution, the frame type corresponding to the data packet is carried in a tunnel header of the N6 tunnel, so that a core network device can identify, based on the frame type, the QoS flow corresponding to the data packet without modifying an application layer protocol.

With reference to the first aspect, in some implementations of the first aspect, that the first indication information indicates the user plane network element to determine, based on the frame type, a QoS flow identifier QFI corresponding to a data packet of the application includes: The first indication information indicates the user plane network element to determine the QFI based on an internet protocol (internet protocol, IP) header of the data packet of the application and the frame type; or the first indication information indicates the user plane network element to determine the QFI based on an identifier of the first tunnel and the frame type. The identifier of the first tunnel is included in the tunnel header of the first tunnel.

It should be noted that when the first tunnel is a device-level tunnel, that is, the first tunnel is a device-specific tunnel, the first tunnel may correspond to a plurality of different service flows. In this case, the IP header of the data packet of the application carries identification information of the application, to determine an application corresponding to the data packet. Therefore, that the first indication information indicates the user plane network element to determine, based on the IP header of the data packet of the application and the frame type, the QFI corresponding to the data packet of the application may be understood as that the first indication information indicates the user plane network element to determine, based on the identification information of the application carried in the IP header of the data packet of the application, the application corresponding to the data packet, and then further determine, by using the frame type, the QFI corresponding to the application. When the first tunnel is an application-level tunnel, that is, the first tunnel is an application-specific tunnel, a service flow corresponding to the data packet may be determined by using the identifier of the first tunnel without a need for the IP header to carry the identification information of the application. The identifier of the first tunnel may be included in the tunnel header of the tunnel. Therefore, the first indication information indicates the user plane network element to determine the QFI based on the identifier of the first tunnel and the frame type.

Based on the foregoing solution, for different types of tunnels, the user plane network element may determine, based on the frame type, the QFI corresponding to the application, so that different QoS processing may be performed for different types of frames.

With reference to the first aspect, in some implementations of the first aspect, the method further includes: The session management network element determines that the data packet of the application is to be sent to the user plane network element through the first tunnel.

According to this solution, when the user plane network element is to receive the data packet of the application through the tunnel, the session management network element may indicate, in advance, the user plane network element to determine, based on the frame type in the tunnel header, the QoS flow corresponding to the data packet of the application. Therefore, when receiving data of the application through the tunnel, the user plane network element knows how to process the data, so that processing efficiency can be improved.

With reference to the first aspect, in some implementations of the first aspect, that the session management network element determines that the data packet of the application is to be sent to the user plane network element through the first tunnel includes: The session management network element receives second indication information from a policy control network element. The session management network element determines, based on the second indication information, that the data packet of the application is to be sent to the user plane network element through the first tunnel. Alternatively, the session management network element determines, based on configuration information, that the data packet of the application is to be sent to the user plane network element through the first tunnel.

In other words, before sending the first indication information, the session management network element determines that the data packet of the application is to be sent to the user plane network element through the tunnel. In other words, the session management network element determines that the data packet of the application is to be transmitted through the tunnel. Further, the session management network element indicates the user plane network element to determine, based on the frame type in the tunnel header of the first tunnel, the QFI corresponding to the data packet of the application. In addition, the session management network element may determine, based on the configuration information, that the data packet of the application is to be transmitted through the tunnel, or may determine, based on the indication information from the policy control network element, that the data packet of the application is to be transmitted through the tunnel. The policy control network element may send, to the session management network element, the first rule carrying the indication information.

With reference to the first aspect, in some implementations of the first aspect, the first data packet includes an extension header. The extension header includes the frame type. That the first indication information indicates the user plane network element to determine, based on the frame type, a quality of service QoS flow identifier QFI corresponding to a data packet of the application includes: The first indication information indicates the user plane network element to determine the QFI based on the frame type in the extension header.

In other words, in another possible implementation, the data packet of the application is not transmitted through the tunnel, but is transmitted based on a user plane protocol. In this case, the first data packet is an IP packet, the first data packet includes an extension header, and the extension header includes a frame type corresponding to the service flow. The extension header herein is, for example, an SRv6 extension header or an IPv6 extension header.

Based on the foregoing solution, the user plane network element may obtain, from the extension header, the frame type corresponding to the application, so that different QoS processing may be performed for different types of frames.

With reference to the first aspect, in some implementations of the first aspect, the method further includes: The session management network element determines, based on the QoS parameter corresponding to the frame type, the QFI corresponding to the frame type.

According to this solution, the session management network element may send the frame type and the QFI corresponding to the frame type to the user plane network element, so that after obtaining the frame type of the application from the first data packet, the user plane network element may determine the QoS flow corresponding to the frame type, and different QoS processing may be performed for different types of frames.

With reference to the first aspect, in some implementations of the first aspect, the method further includes: The session management network element sends third indication information to the user plane network element. The third indication information indicates the user plane network element to send the data packet of the application through a second tunnel. A tunnel header of the second tunnel includes the QFI. In other words, the third indication information indicates the user plane network element to send the data packet of the application to a downstream node (for example, a radio access network device) by using a QoS flow identified by the QFI. The third indication information may be included in the PDR.

The third indication information may, for example, correspond to indication information #2 in Description of Embodiments.

It should be understood that the first indication information and the third indication information may be carried in a same message, or may be carried in different messages.

It should be understood that the second tunnel is a tunnel configured to send the data of the application to the downstream node. For example, the second tunnel is a GTP-U tunnel.

According to the foregoing solution, the data packet of the application may be sent to an access network device through the second tunnel, so that the access network device may schedule data based on the frame type of the data packet.

With reference to the first aspect, in some implementations of the first aspect, the first data packet further includes frame information of a frame corresponding to the data packet of the application. The frame information includes one or more of the frame type, fourth indication information, size information of the frame, or QoS requirement information of the frame. The fourth indication information indicates the frame to which the data packet of the application belongs. The method further includes: The session management network element sends fifth indication information to the user plane network element. The fifth indication information indicates the user plane network element to use the tunnel header of the second tunnel to carry the frame information.

The fourth indication information may be a frame number, where the frame number may identify the frame to which the data packet of the application belongs, or may identify a number of the frame and a number of the data packet of the application in the frame; or the fourth indication information is an identifier of a frame header and an identifier of a frame trailer. Data packets between the frame header and the frame trailer are data packets of a same frame. Alternatively, the fourth indication information indicates whether the data packet of the application and a known data packet belong to a same frame.

According to the foregoing solution, a network side can conveniently identify the frame to which the data packet belongs, to facilitate scheduling of a frame granularity.

With reference to the first aspect, in some implementations of the first aspect, the method further includes: The session management network element sends sixth indication information to the user plane network element, where the sixth indication information indicates the user plane network element to establish the first tunnel. The session management network element receives information about the first tunnel from the user plane network element.

Optionally, before the session management network element sends the sixth indication information to the user plane network element, the session management network element receives eleventh indication information from the policy control network element. The eleventh indication information indicates to establish the first tunnel.

According to a second aspect, a communication method is provided. The method includes: A user plane network element receives a first data packet, where the first data packet includes a data packet of an application and a frame type corresponding to the data packet of the application. The user plane network element determines, based on the frame type, a QoS flow identifier QFI corresponding to the data packet of the application.

The user plane network element may determine, based on indication information received from a session management network element, the QFI corresponding to the data packet of the application. The indication information herein may be specifically an association relationship between the frame type and the QFI of the data packet of the application. The user plane network element may store the association relationship, obtain a frame type of a service flow from the first data packet after receiving the first data packet, and determine, based on the locally stored association relationship and the frame type, the QFI corresponding to the data packet of the application. It should be understood that the user plane network element may receive the first data packet from an application function network element, a multi-access edge computing platform, or an application server.

According to the foregoing solution, the user plane network element may determine, based on the frame type in the first data packet, a QoS flow corresponding to the data packet of the application, so that different QoS processing may be performed for different types of frames, to meet different transmission requirements of different frame types.

With reference to the second aspect, in some implementations of the second aspect, that a user plane network element receives a first data packet includes: The user plane network element receives the first data packet through a first tunnel, where the first data packet includes a tunnel header of the first tunnel, and the tunnel header of the first tunnel includes the frame type. That the user plane network element determines, based on the frame type, a QoS flow identifier QFI corresponding to the data packet of the application includes: The user plane network element determines, based on the frame type in the tunnel header of the first tunnel, the QFI corresponding to the data packet of the application.

In this solution, the frame type of the data packet is carried in the tunnel header, so that the user plane network element can determine, based on the frame type, the QFI corresponding to the data packet of the application, so that distinguishing processing can be performed for different types of frames.

With reference to the second aspect, in some implementations of the second aspect, that the user plane network element determines, based on the frame type, the QoS flow identifier QFI corresponding to the data packet of the application includes: The user plane network element determines, based on an internet protocol IP header of the data packet of the application and the frame type, the QFI corresponding to the data packet. Alternatively, the user plane network element determines, based on an identifier of the first tunnel and the frame type, the QFI corresponding to the data packet of the application, where the identifier of the first tunnel is included in the tunnel header of the first tunnel.

When the first tunnel is a device-level tunnel, that is, the first tunnel is a device-specific tunnel, the first tunnel may correspond to a plurality of different applications. In this case, the IP header of the data packet of the application carries identification information of the application, to determine an application corresponding to the data packet. Therefore, that the user plane network element determines, based on the IP header of the data packet of the application and the frame type, the QFI corresponding to the application may be understood as that the user plane network element determines, based on the identification information of the application carried in the IP header of the data packet of the application, the application corresponding to the data packet, and then further determines, by using the frame type corresponding to the application, the QFI corresponding to the application. When the first tunnel is an application-level tunnel, that is, the first tunnel is an application-specific tunnel, the IP header may not need to carry the identification information of the application. The application corresponding to the data packet may be determined by using the identifier of the first tunnel. The identifier of the first tunnel may be included in the tunnel header of the tunnel. Therefore, the user plane network element determines the QFI based on the identifier of the first tunnel and the frame type.

Based on the foregoing solution, for different types of tunnels, the user plane network element may determine, based on the frame type, the QFI corresponding to the application, so that different QoS processing may be performed for different types of frames.

With reference to the second aspect, in some implementations of the second aspect, the frame type is included in an extension header of the first data packet. That the user plane network element determines, based on the frame type, a QoS flow identifier QFI corresponding to the data packet of the application includes: The user plane network element determines, based on the frame type in the extension header, the QFI corresponding to the data packet of the application.

Based on the foregoing solution, the user plane network element may obtain, from the extension header, the frame type corresponding to the application, so that different QoS processing may be performed for different types of frames.

With reference to the second aspect, in some implementations of the second aspect, the method further includes: The user plane network element sends the data packet of the application through a second tunnel. A tunnel header of the second tunnel includes the QFI.

According to the foregoing solution, the data packet of the application may be sent to an access network device through the second tunnel, so that the access network device may schedule data based on the frame type of the data packet.

With reference to the second aspect, in some implementations of the second aspect, the first data packet further includes frame information of a frame corresponding to the data packet of the application. The frame information includes one or more of the frame type, fourth indication information, size information of the frame, or QoS requirement information of the frame. The fourth indication information indicates the frame to which the data packet of the application belongs. The tunnel header of the second tunnel includes the frame information.

According to the foregoing solution, a network side can conveniently identify the frame to which the data packet belongs, to facilitate scheduling of a frame granularity.

With reference to the second aspect, in some implementations of the second aspect, the method further includes: The user plane network element receives first indication information. The first indication information indicates the user plane network element to determine the QFI based on the frame type in the tunnel header of the first tunnel or the frame type in the extension header.

With reference to the second aspect, in some implementations of the second aspect, the method further includes: The user plane network element receives third indication information. The third indication information indicates the user plane network element to send the data packet of the application through the second tunnel. The tunnel header of the second tunnel includes the QFI.

With reference to the second aspect, in some implementations of the second aspect, the method further includes: The user plane network element receives fifth indication information. The fifth indication information indicates the user plane network element to use the tunnel header of the second tunnel to carry the frame information.

With reference to the second aspect, in some implementations of the second aspect, the method further includes: The user plane network element receives sixth indication information from the session management network element. The user plane network element establishes the first tunnel based on the sixth indication information.

According to a third aspect, a communication method is provided. The method includes: A policy control network element receives information about an application, where the information about the application includes a frame type corresponding to a data packet of the application. The policy control network element sends, to a session management network element, a quality of service QoS parameter corresponding to the frame type.

With reference to the third aspect, in some implementations of the third aspect, the information about the application indicates to establish a first tunnel, and the first tunnel is configured to send the data packet of the application to a user plane network element. The method further includes: The policy control network element sends eleventh indication information to the session management network element, where the eleventh indication information indicates the session management network element to establish the first tunnel.

With reference to the third aspect, in some implementations of the third aspect, the method further includes: The policy control network element receives information about the first tunnel from the session management network element. The policy control network element sends the information about the first tunnel to an application function network element corresponding to the application.

With reference to the third aspect, in some implementations of the third aspect, the first tunnel is a tunnel corresponding to the application or a service flow.

With reference to the third aspect, in some implementations of the third aspect, the information about the application further indicates to send the service flow or the data packet of the application to the user plane network element through the first tunnel. The policy control network element sends fifth indication information to the session management network element. The fifth indication information indicates to send the data packet of the application to the user plane network element through the first tunnel.

With reference to the third aspect, in some implementations of the third aspect, the information about the application further indicates to send frame information of a frame corresponding to the data packet of the application to an access network device. The frame information includes one or more of the frame type, third indication information, size information of the frame, or QoS requirement information of the frame. The third indication information indicates the frame to which the data packet of the application belongs. The policy control network element, sends seventh indication information to the session management network element. The seventh indication information indicates to send the frame information to the access network device.

With reference to the third aspect, in some implementations of the third aspect, that the policy control network element sends, to a session management network element, a QoS parameter corresponding to the frame type includes: The policy control network element determines a first rule based on the information about the application, where the first rule includes the QoS parameter corresponding to the frame type. The policy control network element sends the first rule to the session management network element.

According to a fourth aspect, a communication method is provided. The method includes: A session management network element receives characteristic information of an application from an application function network element. The session management network element sends the characteristic information of the application and seventh indication information to a user plane network element. The seventh indication information indicates the user plane network element to determine, based on the characteristic information, a frame type corresponding to a data packet of the application.

The characteristic information is used to determine the frame type corresponding to the data packet. Therefore, the characteristic information herein is related to a frame.

It should be understood that the characteristic information of the application and the seventh indication information may be carried in a same message, or may be carried in different messages. In other words, the session management network element may simultaneously send the characteristic information of the application and the seventh indication information to the user plane network element, or may send the characteristic information of the application and the seventh indication information to the user plane network element in two consecutive messages, or may send the seventh indication information after a period of time after sending the characteristic information of the application to the user plane network element. For example, the session management network element sends the seventh indication information to the user plane network element after determining a QoS flow based on QoS parameters of different frame types.

In the foregoing technical method, the user plane network element is indicated to determine, based on the characteristic information, the frame type corresponding to the data packet, so that frame types corresponding to different data packets can be distinguished, and distinguishing processing can be performed on different types of frames.

With reference to the fourth aspect, in some implementations of the fourth aspect, the characteristic information includes at least one of a sending rule of a frame of the application, a burst size of a frame of the application, an interval between frames of the application, IP header information of the application, an identifier of the application, or a type of the application.

With reference to the fourth aspect, in some implementations of the fourth aspect, the method further includes: The session management network element receives a QoS parameter corresponding to the frame type. The session management network element determines, based on the QoS parameter corresponding to the frame type, a QoS flow corresponding to the frame type. The session management network element sends eighth indication information to the user plane network element. The eighth indication information indicates the user plane network element to send, by using the QoS flow, the data packet corresponding to the frame type.

According to the foregoing solution, the data packet of the application may be sent to an access network device through the second tunnel, so that the access network device may schedule data based on the frame type of the data packet.

With reference to the fourth aspect, in some implementations of the fourth aspect, that the eighth indication information indicates the user plane network element to send, by using the QoS flow, the data packet corresponding to the frame type includes: The eighth indication information indicates the user plane network element to send, through a second tunnel, the data packet corresponding to the frame type. The data packet is encapsulated in a second data packet. The second data packet further includes a tunnel header of the second tunnel. The tunnel header of the second tunnel includes frame information corresponding to the data packet and an identifier QFI of the QoS flow. The frame information includes one or more of the frame type, ninth indication information, size information of a frame, or QoS requirement information of the frame. The ninth indication information indicates the frame to which the data packet of the application belongs.

With reference to the fourth aspect, in some implementations of the fourth aspect, the method further includes: The session management network element sends tenth indication information to the user plane network element. The tenth indication information indicates the user plane network element to detect, based on the characteristic information, the frame to which the data packet of the application belongs. Optionally, the tenth indication information may further indicate the user plane network element to detect, based on the characteristic information, other frame information of the frame to which the data packet of the application belongs, for example, size information of the frame, information about a relative position (for example, a position relative to a frame header) of the data packet in the frame, and another data packet belonging to a same frame as the data packet.

With reference to the fourth aspect, in some implementations of the fourth aspect, the method further includes: The session management network element receives the characteristic information of the application from the application function network element.

According to a fifth aspect, a communication method is provided. The method includes: A user plane network element receives characteristic information of an application and seventh indication information from a session management network element. The user plane network element determines, based on the seventh indication information, a frame type corresponding to a data packet of the application, where the frame type is determined based on the characteristic information of the application.

With reference to the fifth aspect, in some implementations of the fifth aspect, the characteristic information includes at least one of a sending rule of a frame of the application, a burst size of the application, an interval between frames of the application, IP header information of the application, an identifier of the application, or a type of the application.

With reference to the fifth aspect, in some implementations of the fifth aspect, the method further includes: The user plane network element determines, based on the frame type of the application, a QoS flow corresponding to the frame type. The user plane network element sends, by using the QoS flow, the data packet corresponding to the frame type.

With reference to the fifth aspect, in some implementations of the fifth aspect, that the user plane network element sends, by using the QoS flow, the data packet corresponding to the frame type includes: The user plane network element sends, through a second tunnel, the data packet corresponding to the frame type. The data packet is encapsulated in a second data packet. The second data packet further includes a tunnel header of the second tunnel. The tunnel header of the second tunnel includes frame information corresponding to the data packet and an identifier QFI of the QoS flow. The frame information includes one or more of the frame type, ninth indication information, size information of a frame, or QoS requirement information of the frame. The ninth indication information indicates the frame to which the data packet of the application belongs.

With reference to the fifth aspect, in some implementations of the fifth aspect, the method further includes: The user plane network element detects, based on the characteristic information, the frame to which the data packet of the application belongs. The user plane network element includes the frame information of the frame in the tunnel header of the second tunnel.

With reference to the fifth aspect, in some implementations of the fifth aspect, the method further includes: The user plane network element receives seventh indication information from the session management network element. The seventh indication information indicates the user plane network element to determine, based on the characteristic information of the application, the frame type corresponding to the data packet of the application.

According to a sixth aspect, a communication method is provided. The method includes: A first function receives a data packet of an application sent by an application server. The first function obtains information about a frame corresponding to the data packet. The information about the frame includes one or more of a type of the frame, ninth indication information, a size information of the frame, or QoS requirement information of the frame. The ninth indication information indicates the frame to which the data packet of the application belongs. The first function sends the data packet of the application and the frame information to a user plane network element.

The first function may be, for example, an application function or a multi-access edge computing platform.

With reference to the sixth aspect, in some implementations of the sixth aspect, the method further includes: The first function receives a first message from the application server. The first message includes the data packet of the application and the frame information corresponding to the data packet of the application.

With reference to the sixth aspect, in some implementations of the sixth aspect, the method further includes: The first function sends the data packet of the application and the frame information to the user plane network element through a tunnel. The frame information is included in a tunnel header.

With reference to the sixth aspect, in some implementations of the sixth aspect, the method further includes: The first function determines a tunnel identifier based on a frame type of the frame corresponding to the data packet of the application or QoS requirement information of the frame. The tunnel header includes the tunnel identifier.

With reference to the sixth aspect, in some implementations of the sixth aspect, the first function sends a third data packet to the user plane network element. The third data packet includes the data packet of the application and an extension header, and the extension header includes the frame information.

With reference to the sixth aspect, in some implementations of the sixth aspect, the method further includes: The first function provides a first API. The first API is used by the application server to request the first function to prepare a radio resource for sending data of the application. A parameter of the first API includes a frame type of the application and QoS requirement information corresponding to the frame type.

With reference to the sixth aspect, in some implementations of the sixth aspect, the method further includes: The first function sends the frame type of the application and the QoS requirement information corresponding to the frame type to a core network element, so as to prepare the radio resource for the application.

With reference to the sixth aspect, in some implementations of the sixth aspect, the method further includes: The first function sends an uplink tunnel identifier corresponding to the tunnel to the core network element, and receives downlink tunnel information from the user plane network element.

After the first function receives the frame type and the QoS requirement information sent by the application server through the first API, the first function determines, based on the frame type or the QoS requirement information, the tunnel identifier corresponding to the frame type.

With reference to the sixth aspect, in some implementations of the sixth aspect, the method further includes: The first function provides a second API. The second API is used by the application server to request the first function to send the data packet of the application. The application server sends, through the API, the data packet of the application and information about the frame corresponding to the data packet of the application.

With reference to the sixth aspect, in some implementations of the sixth aspect, the first message is a request message corresponding to the second API.

According to a seventh aspect, a communication method is provided. The method includes: An application server invokes a first API of a first function to send a frame type of an application and QoS requirement information corresponding to the frame type to the first function, to request the first function to prepare a radio resource for sending data of the application. The application server invokes a second API of the first function to send a data packet of the application, so that the first function sends the data packet of the application based on the frame type of a frame corresponding to the data packet.

With reference to the seventh aspect, in some implementations of the seventh aspect, the second API further includes frame information. The frame information includes one or more of the frame type, ninth indication information, or a size information of the frame. The ninth indication information indicates the frame to which the data packet of the application belongs.

According to an eighth aspect, a communication apparatus is provided. The apparatus is configured to perform the methods provided in the first aspect to the eighth aspect. Specifically, the apparatus may include units and/or modules configured to perform the methods provided in the first aspect to the eighth aspect, for example, a processing unit and/or a communication unit.

In an implementation, the apparatus is a network device. When the apparatus is the network device, the communication unit may be a transceiver or an input/output interface, and the processing unit may be a processor.

In another implementation, the apparatus is a chip, a chip system, or a circuit used in a network device. When the apparatus is the chip, the chip system, or the circuit used in a communication unit, the communication unit may be an input/output interface, an interface circuit, an output circuit, an input circuit, a pin, a related circuit, or the like on the chip, the chip system, or the circuit. The processing unit may be a processor, a processing circuit, a logic circuit, or the like.

In a possible case, the apparatus is a session management network element or a chip, a chip system, or a circuit in a session management network element. In this case, the apparatus may include units and/or modules configured to perform the methods provided in the first aspect and the fourth aspect, for example, a processing unit and/or a communication unit.

In another possible case, the apparatus is a user plane network element or a chip, a chip system, or a circuit in a user plane network element. In this case, the apparatus may include units and/or modules configured to perform the methods provided in the second aspect and the fifth aspect, for example, a processing unit and/or a communication unit.

In another possible case, the apparatus is a policy control network element or a chip, a chip system, or a circuit in a policy control network element. In this case, the apparatus may include units and/or modules configured to perform the method provided in the third aspect, for example, a processing unit and/or a communication unit.

Optionally, the transceiver may be a transceiver circuit. Optionally, the input/output interface may be an input/output circuit.

According to a ninth aspect, a communication apparatus is provided. The apparatus includes: a memory, configured to store a program; and a processor, configured to execute the program stored in the memory. When the program stored in the memory is executed, the processor is configured to perform the methods provided in the first aspect to the eighth aspect.

In an implementation, the apparatus is a network device (for example, the foregoing network elements).

In another implementation, the apparatus is a chip, a chip system, or a circuit used in a network device (for example, the foregoing network elements).

According to a tenth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the foregoing information, the processor outputs the foregoing information to a transceiver, so that the transceiver transmits the foregoing information. After the foregoing information is output by the processor, other processing may further need to be performed on the foregoing information before the foregoing information reaches the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

Based on the foregoing principle, for example, the receiving request information mentioned in the foregoing method may be understood as that the processor receives the input information.

Operations such as transmitting, sending, and obtaining/receiving related to the processor may be more generally understood as operations such as output, receiving, and input of the processor unless otherwise specified or if the operations do not conflict with actual functions or internal logic of the operations in related descriptions, instead of operations such as transmitting, sending, and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to an eleventh aspect, a computer-readable medium is provided. The computer-readable medium stores program code to be executed by a device, and the program code is used to perform the methods provided in the first aspect to the fifth aspect.

According to a twelfth aspect, a computer program product including instructions is provided. When the computer program product is run on a computer, the computer is enabled to perform the methods provided in the first aspect to the fifth aspect.

According to a thirteenth aspect, a chip is provided. The chip includes a processor and a communication interface. The processor reads, through the communication interface, instructions stored in a memory, to perform the methods provided in the first aspect to the fifth aspect.

Optionally, in an implementation, the chip may further include a memory. The memory stores instructions. The processor is configured to execute the instructions stored in the memory. When the instructions are executed, the processor is configured to perform the methods provided in the first aspect to the fifth aspect.

According to a fourteenth aspect, a communication system is provided, including a session management network element and a user plane network element. The session management network element is configured to: obtain a first rule, where the first rule includes a quality of service QoS parameter corresponding to a frame type of an application, and send first indication information to the user plane network element according to the first rule. The first indication information indicates the user plane network element to determine, based on the frame type, a QoS flow identifier QFI corresponding to a data packet of the application. The data packet of the application is encapsulated in a first data packet. The first data packet includes the frame type. The user plane network element is configured to receive the first indication information.

According to a fifteenth aspect, a communication system is provided, including a session management network element and a user plane network element. The session management network element is configured to: send characteristic information of an application to the user plane network element, and send seventh indication information to the user plane network element. The seventh indication information indicates the user plane network element to determine, based on the characteristic information, a frame type corresponding to a data packet of the application. The user plane network element is configured to determine, based on the characteristic information of the application, the frame type corresponding to the data packet of the application.

### BRIEF DESCRIPTION OF DRAWINGS

FIG. 1 is a schematic diagram of a network architecture applicable to an embodiment of this application;
FIG. 2 is a schematic diagram of a communication method 200 according to an embodiment of this application;
FIG. 3 is a schematic diagram of a communication method 300 according to another embodiment of this application;
FIG. 4A and FIG. 4B are a schematic diagram of a communication method 400 according to an embodiment of this application;
FIG. 5 is a diagram of a data structure for transmitting data through an N6 tunnel;
FIG. 6 is another schematic flowchart of a communication method applicable to an embodiment of this application;
FIG. 7 is another schematic flowchart of a communication method applicable to an embodiment of this application;
FIG. 8 is another schematic flowchart of a communication method applicable to an embodiment of this application;
FIG. 9 is another schematic flowchart of a communication method applicable to an embodiment of this application;
FIG. 10 is a schematic block diagram of a communication apparatus according to an embodiment of this application;
FIG. 11 is another schematic block diagram of a communication apparatus according to an embodiment of this application; and
FIG. 12 is a schematic diagram of a structure of a communication apparatus according to an embodiment of this application.

### DESCRIPTION OF EMBODIMENTS

To make objectives, technical solutions, and advantages of this application clearer, the following describes the technical solutions of this application with reference to accompanying drawings. A specific operation method in a method embodiment may also be applied to an apparatus embodiment or a system embodiment. In the descriptions of this application, unless otherwise specified, "a plurality of" means two or more than two.

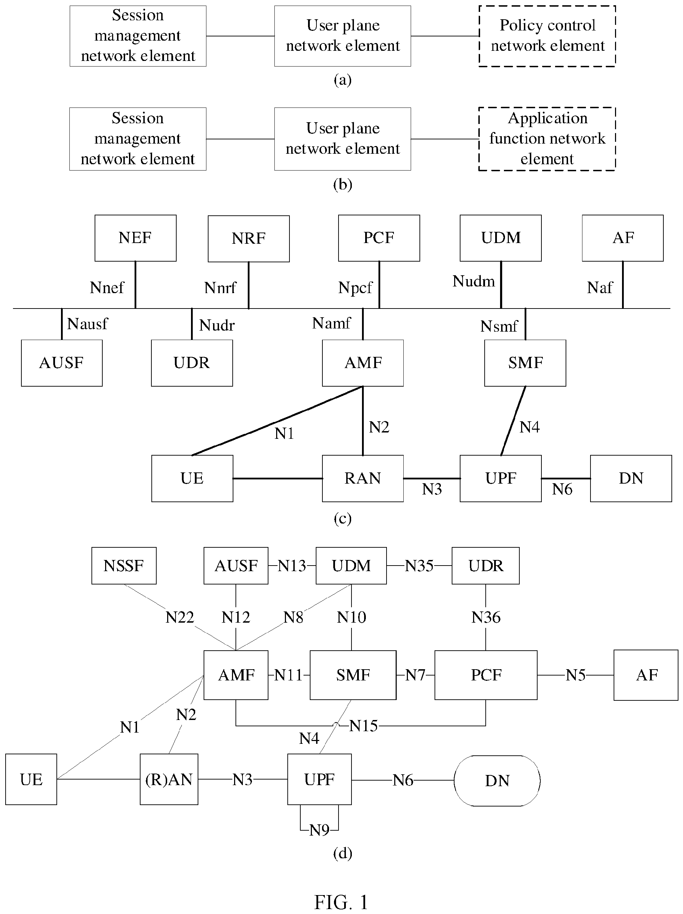

To resolve the problem mentioned in the background, as shown in (a) in FIG. 1, this application provides a communication system. The system includes a session management network element and a user plane network element. The session management network element is configured to: obtain a first rule, where the first rule includes a quality of service QoS parameter corresponding to a frame type of an application, and send first indication information to the user plane network element according to the first rule. The first indication information indicates the user plane network element to determine, based on the frame type, a QoS flow identifier QFI corresponding to a data packet of the application. The data packet of the application is encapsulated in a first data packet. The first data packet includes the frame type. The user plane network element is configured to receive the first indication information.

Optionally, the system further includes a policy control network element. The policy control network element is configured to: receive information about the application, where the information about the application includes the frame type corresponding to the application, and send the QoS parameter corresponding to the frame type to the session management network element.

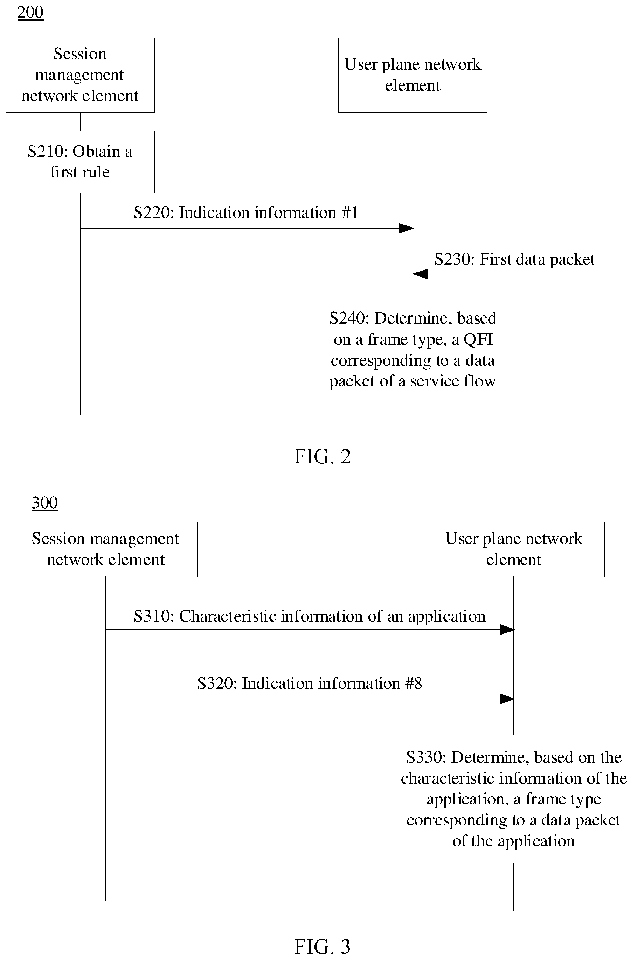

For specific interaction between network elements in (a) in FIG. 1, refer to a method procedure in FIG. 2. For a specific solution, refer to the descriptions in a method 200.

As shown in (b) in FIG. 1, this application provides another communication system. The system includes a session management network element and a user plane network element. The session management network element is configured to: send characteristic information of an application to the user plane network element, and send seventh indication information to the user plane network element. The seventh indication information indicates the user plane network element to determine, based on the characteristic information, a frame type corresponding to a data packet of the application. The user plane network element is configured to determine, based on the characteristic information of the application, the frame type corresponding to the data packet of the application.

Optionally, the system further includes an application function network element. The application function network element is configured to send the characteristic information of the application to the session management network element.

For specific interaction between network elements in (b) in FIG. 1, refer to a method procedure in FIG. 3. For a specific solution, refer to the descriptions in a method 300.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

(c) in FIG. 1 is a schematic diagram of a 5th generation (5th generation, 5G) network architecture based on a service-oriented architecture. The session management network element in (a) and (b) in FIG. 1 may be an SMF in (c) in FIG. 1. The user plane network element in (a) in FIG. 1 and (b) in FIG. 1 may be a UPF in (c) in FIG. 1. The policy control network element in (a) in FIG. 1 may be a PCF in (c) in FIG. 1. The application function network element in (b) in FIG. 1 may be an AF in (c) in FIG. 1.

The 5G network architecture shown in (c) in FIG. 1 may include three parts: a terminal device, a data network (data network, DN), and an operator network. The following briefly describes functions of some network elements.

The operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, a radio access network (radio access network, RAN) network element, a user plane function (user plane function, UPF) network element, and the like. In the foregoing operator network, a part other than a radio access network may be referred to as a core network.
1. Terminal device (terminal device): may also be referred to as user equipment (user equipment, UE). The terminal device is a device having a wireless transceiver function, may be deployed on land, including an indoor or outdoor device, a hand-held device or a vehicle-mounted device, may be deployed on water (for example, on a ship), or may be deployed in the air (for example, on an airplane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal device herein is a 3rd generation partnership project (3rd generation partnership project, 3GPP) terminal. For ease of description, in this application, an example in which UE represents a terminal device is used for description.
   The terminal device may establish a connection to the operator network through an interface (for example, N1) provided by the operator network, and use services such as data and/or voice provided by the operator network. The terminal device may further access a DN by using the operator network, and use an operator service deployed on the DN and/or a service provided by a third party. The third party may be a service provider other than the operator network and the terminal device, and may provide services such as data and/or voice for the terminal device. A specific representation form of the third party may be specifically determined based on an actual application scenario, and is not limited herein.
2. Radio access network (radio access network, RAN) network element: is referred to as a RAN for short in the following, and corresponds to an access network device.
   The RAN is a subnet of the operator network, and is an implementation system between a service node in the operator network and the terminal device. To access the operator network, the terminal device first passes the RAN, and may be connected to the service node in the operator network by using the RAN. A RAN device in this application is a device that provides a wireless communication function for the terminal device, and the RAN device is also referred to as an access network device. The RAN device in this application includes but is not limited to: a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), a mobile switching center, and the like.
3. User plane function (user plane function, UPF): is used to perform packet routing and forwarding, quality of service (quality of service, QoS) handling for user plane data, and the like.
   In a 5G communication system, the user plane network element may be a user plane function (user plane function, UPF) network element. In a future communication system, the user plane network element may still be the UPF network element, or may have another name. This is not limited in this application.
4. Multicast/broadcast user plane function (multicast/broadcast user plane function, MB-UPF)
   The MB-UPF is mainly responsible for transmitting a multicast/broadcast stream to the RAN (or the UPF), and may perform packet filtering and distribution on the multicast/broadcast stream, implement QoS enhancement and counting/reporting of a multicast/broadcast service, and the like. The MB-UPF and the UPF in this application are not strictly distinguished, and the (MB-)UPF is used to represent the MB-UPF or the UPF.
5. Data network (data network, DN): is a network configured to provide transmission data.
   In the 5G communication system, the data network may be a data network. In the future communication system, the data network may still be the DN element, or may have another name. This is not limited in this application.
6. Access and mobility management network element
   The access and mobility management network element is mainly configured to perform mobility management, access management, and the like, and may be configured to implement another function other than session management in an MME function, for example, functions such as lawful interception and access authorization/authentication.
   In the 5G communication system, the access and mobility management network element may be an access and mobility management function (access and mobility management function, AMF). In the future communication system, the access and mobility management network element may still be the AMF, or may have another name. This is not limited in this application.
7. Session management function (session management function, SMF): is mainly used for session management, internet protocol (internet protocol, IP) address allocation and management of user equipment, selection of a manageable user plane function, termination of interfaces toward policy control functions and support for charging, downlink data notification, and the like.
   In the 5G communication system, the session management network element may be a session management function network element. In the future communication system, the session management network element may still be the SMF network element, or may have another name. This is not limited in this application.
8. Multicast/broadcast session management function (multicast/broadcast session management function, MB-SMF)
   The MB-SMF is mainly responsible for managing a multicast/broadcast session, controlling multicast/broadcast transmission, and configuring the MB-UPF and the RAN according to a policy rule of a multicast/broadcast service provided by the PCF or locally configured, to complete transmission of a multicast/broadcast stream. The MB-SMF and the SMF in this application are not strictly distinguished, and the (MB-)SMF is used to represent the MB-SMF or the SMF.
9. Policy control function (policy control function, PCF): is a unified policy framework to indicate network behavior, and provides policy rule information for a control plane function network element (such as the AMF and the SMF), and the like.
   In a 4G communication system, the policy control network element may be a policy and charging rules function (policy and charging rules function, PCRF) network element. In the 5G communication system, the policy control network element may be a policy control function PCF network element. In the future communication system, the policy control network element may still be the PCF network element, or may have another name. This is not limited in this application.
10. Application function (application function, AF): is used to implement application impact on data routing, wirelessly access network exposure function network element, and interact with a policy framework to perform policy control, and so on.
   In the 5G communication system, the application network element may be an application function network element. In the future communication system, the application network element may still be the AF network element, or may have another name. This is not limited in this application.
11. Unified data management (unified data management, UDM): is used to handle UE identification, access authentication, perform registration and mobility management, and the like.
   In the 5G communication system, the data management network element may be a unified data management (unified data management, UDM) network element. In the 4G communication system, the data management network element may be a home subscriber server (home subscriber server, HSS) network element. In the future communication system, the unified data management may still be the UDM network element, or may have another name. This is not limited in this application.
12. Unified data storage (unified data repository, UDR): mainly has a function of accessing data, such as subscription data, policy data, and application data.
13. Authentication server (authentication server function, AUSF): is used to provide an authentication service, generate a key to implement bidirectional authentication on user equipment, and support a unified authentication framework.
   In the 5G communication system, the authentication server may be an authentication server function network element. In the future communication system, the authentication server function network element may still be the AUSF network element, or may have another name. This is not limited in this application.
14. Data network (data network, DN): The DN is a network located outside the operator network. The operator network may access a plurality of DNs, and a plurality of services may be deployed on the DN, and may provide a service such as data and/or voice for the terminal device. For example, the DN is a private network of a smart factory, and a sensor installed in a workshop of the smart factory may be a terminal device. A control server of the sensor is deployed in the DN, and the control server may provide a service for the sensor. The sensor may communicate with the control server, to obtain an instruction of the control server, transmit collected sensor data to the control server according to the instruction, and the like. For another example, the DN is an internal office network of a company, and a mobile phone or a computer of an employee of the company may be a terminal device. The mobile phone or the computer of the employee may access information, data resources, and the like in the internal office network of the company.

Nausf, Nnef, Npcf, Nudm, Naf, Namf, Nsmf, N1, N2, N3, N4, and N6 in (c) in FIG. 1 are interface serial numbers. For meanings of the interface serial numbers, refer to meanings defined in a 3GPP standard protocol. This is not limited herein.

(d) in FIG. 1 is a schematic diagram of a 5G network architecture based on a point-to-point interface. For descriptions of functions of network elements in (d) in FIG. 1, refer to the descriptions of functions of corresponding network elements in (c) in FIG. 1. Details are not described again. A main difference between (d) in FIG. 1 and (c) in FIG. 1 lies in that an interface between network elements in (d) in FIG. 1 is a point-to-point interface rather than a service-oriented interface.

In the architecture shown in (d) in FIG. 1, names and functions of the interfaces between the network elements are as follows:
(1) N7: It represents an interface between the PCF and the SMF, and is used to deliver a protocol data unit (protocol data unit, PDU) session granularity control policy and a service data flow granularity control policy.
(2) N15: It represents an interface between the PCF and the AMF, and is used to deliver a UE policy and an access control related policy.
(3) N5: It represents an interface between the AF and the PCF, and is used to deliver an application service request and report a network event.
(4) N4: It represents an interface between the SMF and the UPF, and is used to transfer information between a control plane and a user plane, including delivery of a forwarding rule, a QoS control rule, a traffic statistics rule, and the like from the control plane to the user plane, and reporting of information about the user plane.
(5) N11: It represents an interface between the SMF and the AMF, and is used to: transfer PDU session tunnel information between the RAN and the UPF, transfer a control message sent to UE, transfer radio resource control information sent to the RAN, and the like.
(6) N2: It represents an interface between the AMF and the RAN, and is used to transfer radio bearer control information from a core network side to the RAN, and the like.
(7) N1: It represents an interface between the AMF and the UE, is access-irrelevant, and is used to transfer a QoS control rule to the UE, and the like.
(8) N8: It represents an interface between the AMF and the UDM, and is used by the AMF to obtain access and mobility management related subscription data and authentication data from the UDM, and is used by the AMF to register current mobility management related information of the UE with the UDM, and the like.
(9) N10: It represents an interface between the SMF and the UDM, and is used by the SMF to obtain session management related subscription data from the UDM, and is used by the SMF to register current session related information of the UE with the UDM, and the like.
(10) N3 5: It represents an interface between the UDM and the UDR, and is used by the UDM to obtain user subscription data information from the UDR.
(11) N36: It represents an interface between the PCF and the UDR, and is used by the PCF to obtain policy-related subscription data and application data-related information from the UDR.
(12) N12: It represents an interface between the AMF and the AUSF, and is used by the AMF to initiate an authentication procedure to the AUSF, where an SUCI may be carried as a subscription identifier.
(13) N13: It represents an interface between the UDM and the AUSF, and is used by the AUSF to obtain a user authentication vector from the UDM, to perform the authentication procedure.

It may be understood that the network elements or the functions may be network elements in a hardware device, or may be software functions running on dedicated hardware, or may be virtualized functions instantiated on a platform (for example, a cloud platform). For ease of description, in this application, an example in which a network device is an access and mobility management function AMF, and a base station is a radio access network RAN is used for description.

A mobility management network element, a session management network element, a policy control network element, an application function network element, an access network device, and a user plane network element in this application may be respectively the AMF, the SMF, the PCF, the AF, the RAN, and the UPF in (c) or (b) in FIG. 1, or may be network elements that have functions of the AMF, the SMF, the PCF, the AF, the RAN, and the UPF in a future communication network, for example, a 6th generation (6th generation, 6G) network. This is not limited in this application.

It should be understood that the foregoing network architecture used in embodiments of this application is merely an example, and a network architecture applicable to embodiments of this application is not limited thereto. Any network architecture that can implement functions of the foregoing network elements is applicable to embodiments of this application.

For example, in some network architectures, network functions and network element entities, such as an AMF, an SMF network element, a PCF network element, a BSF network element, and a UDM network element, are all referred to as network function (network function, NF) network elements. Alternatively, in some other network architectures, a set of network elements, such as an AMF, an SMF network element, a PCF network element, a BSF network element, and a UDM network element, may be referred to as a control plane function network element.

Aspects or features in embodiments of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include, and/or carry instructions and/or data.

FIG. 2 is a schematic flowchart of a communication method 200 according to an embodiment of this application. The method 200 includes the following steps.

S210: A session management network element obtains a first rule.

For example, the session management network element obtains a first rule, where the first rule includes a QoS parameter corresponding to a frame type of an application.

In a possible implementation, the session management network element receives the first rule from a policy control network element. For example, the policy control network element receives application information of the application from an application function network element or a multi-access edge computing platform. The application information includes the frame type corresponding to the application and a QoS requirement. It should be understood that the application information may include a plurality of different frame types of the application and different QoS requirements corresponding to different frame types. The policy control network element generates the first rule based on the application information of the application, and sends the first rule to the session management network element. The first rule includes the QoS parameter corresponding to the frame type. The QoS parameter is determined based on the QoS requirement. It should be noted that the application information of the application may include QoS requirements corresponding to different service flows of the application, and different service flows correspond to different frame types. The policy control network element may determine, based on the QoS requirements corresponding to different service flows, QoS parameters corresponding to different service flows. In other words, the first rule may include different QoS parameters corresponding to different frame types of the application, for example, information such as a 5G QoS identifier (5G QoS identifier, 5QI) and a data packet delay budget (packet delay budget, PDB) corresponding to different frame types.

In another possible implementation, the session management network element determines the first rule based on a local configuration. In other words, the QoS parameter corresponding to the frame type of the application may be configured for the session management network element in a pre-configuration manner.

The first rule herein may be, for example, a PCC rule.

Optionally, after obtaining, from the first rule, the QoS parameter corresponding to the frame type of the application, the session management network element determines, based on the QoS parameter, a QoS flow identifier QFI corresponding to the frame type.

S220: The session management network element sends indication information #1 to a user plane network element.

Correspondingly, the user plane network element receives the indication information #1 from the session management network element.

For example, the session management network element sends the indication information #1 to the user plane network element according to the first rule. The indication information #1 indicates the user plane network element to determine, based on the frame type, the QoS flow identifier QFI corresponding to a data packet of the application. In other words, the indication information #1 indicates the user plane network element to determine, based on the frame type of the application, the QFI corresponding to the data packet when the user plane network element receives the data packet of the application. It should be understood that the data packet of the application herein may be a data packet of a service flow of the application.

In a specific implementation, the indication information #1 includes the frame type and a QFI corresponding to the frame type. In other words, the indication information #1 may be a correspondence between the frame type and the QFI. Further, the indication information #1 may be included in a PDR. Correspondingly, the QFI and the frame type (or the correspondence between the QFI and the frame type) are included in the PDR. Correspondingly, after receiving the indication information #1, the user plane network element locally stores the correspondence between the frame type and the QFI.

Optionally, the session management network element sends indication information #2 to the user plane network element. The indication information #2 indicates the user plane network element to send the data packet of the application through a second tunnel, and a tunnel header of the second tunnel includes the QFI. In other words, the indication information #2 indicates the user plane network element to encapsulate the data packet of the application in a second tunnel, and include the QFI in a tunnel header of the second tunnel. The second tunnel is a tunnel configured to send data to a downstream node. For example, the second tunnel is a GTP-U tunnel. In other words, the indication information #2 indicates the user plane network element to send, by using the QoS flow identified by the QFI, the data packet of the application to the downstream node, for example, to a radio access network device. Further, the indication information #2 may be included in the PDR.

S230: The user plane network element receives a first data packet.

For example, the user plane network element receives the first data packet from the application function network element, the multi-access edge computing platform, or an application server. The first data packet includes the data packet of the application and a frame type corresponding to the data packet.

In a possible implementation, the data packet of the application is transmitted through a first tunnel, that is, the user plane network element receives the data packet of the application through the first tunnel. The first tunnel herein is, for example, a tunnel between the application server and the user plane network element, or a tunnel between the multi-access edge computing platform and the user plane network element, or a tunnel between the application function network element and the user plane network element. The first tunnel herein may be referred to as an N6 tunnel in some scenarios. In this case, the first data packet includes a tunnel header of the first tunnel, and the tunnel header of the first tunnel includes a frame type corresponding to a service flow. In this case, the indication information #1 may specifically indicate the user plane network element to determine, based on the frame type in the tunnel header of the first tunnel, the QFI corresponding to the service flow. In other words, the indication information #1 may specifically indicate the user plane network element to determine, based on the frame type carried in the tunnel header in the first data packet when receiving the data packet of the application by using the first data packet, the QFI corresponding to the service flow.

It should be understood that the first tunnel may be pre-established, or may be established only when a service is initiated. Optionally, if the first tunnel is not pre-established (that is, the first tunnel is established only when a service is initiated), the session management network element may indicate the user plane network element to establish the first tunnel. The first tunnel is configured to send the application or the data packet of the application to the user plane network element. For example, the session management network element sends indication information #3 to the user plane network element. The indication information #3 indicates the user plane network element to establish the first tunnel. Correspondingly, the user plane network element receives the indication information #3, establishes the first tunnel based on the indication information #3, and then sends information about the first tunnel to the session management network element. The session management network element sends the information about the tunnel to the policy control network element. The information about the first tunnel may include an IP address of the first tunnel and/or an identifier of the first tunnel. The indication information #3 may include a tunnel type, for example, a GTP-U tunnel or a GRE tunnel. It should be understood that the session management network element determines, based on indication information #4 received from a PCF, that a tunnel needs to be established, and the session management network element sends the indication information #3 to the user plane network element, so as to establish the first tunnel. It should be understood that the indication information #4 may be carried in the first rule and sent to the session management network element.

Optionally, the first tunnel may have different granularities. For example, the first tunnel is a tunnel at an application granularity, that is, the first tunnel is not shared by a service flow of another application, or the first tunnel is a device-level tunnel. For example, the first tunnel is shared by a plurality of applications on the multi-access edge computing platform, that is, the plurality of applications on the multi-access edge computing platform send data to the user plane network element through the first tunnel.

Further, for tunnels of different granularities, the indication information #1 may further indicate different content. For example, when the first tunnel is a device-level tunnel, the indication information #1 may indicate the user plane network element to determine, based on an IP header of the data packet of the application and the frame type corresponding to the data packet, a QFI corresponding to the service flow. For another example, when the first tunnel is an application-level tunnel, the indication information #1 may indicate the user plane network element to determine, based on an identifier of the first tunnel and the frame type, the QFI corresponding to the service flow.

It should be further noted that the device-level tunnel is a device-specific tunnel, and one device-level tunnel may correspond to a plurality of different applications. The IP header (or an Ethernet header) of the data packet of the application carries identification information of the application, to determine an application corresponding to the data packet. It should be understood that, in some scenarios, the identification information of the application may further determine a specific service flow in the application, that is, the identification information of the application may be information identified at an application layer, or may be information identified at a service layer. This is not limited in this application. Therefore, that the indication information #1 indicates the user plane network element to determine, based on the IP header (or the Ethernet header) of the data packet of the application and the frame type, the QFI corresponding to the data packet of the application may be understood as that the indication information #1 indicates the user plane network element to determine, based on the identification information of the application carried in the IP header (or the Ethernet header) of the data packet of the application, the application corresponding to the data packet, and then further determine, based on the frame type corresponding to the data packet, the QFI corresponding to the data packet. The application-level tunnel is an application-specific tunnel, that is, different tunnels are created for different applications. Therefore, in this case, the application may not need to be determined based on information carried in the IP header (or an Ethernet header), and the application corresponding to the data packet may be determined by using the identifier of the first tunnel. The identifier of the first tunnel may be included in the tunnel header of the tunnel. The application-level tunnel is configured to send all data packets related to an application, distinguish different applications by using a tunnel identifier, and determine, by using a frame type in a tunnel header, service flows having different QoS requirements in the application.

Optionally, before sending the indication information #1, the session management network element determines that the data packet of the application is to be sent to the user plane network element through the first tunnel. In other words, the session management network element determines that the data packet of the application is to be transmitted through a tunnel. In one case, the session management network element may determine, based on configuration information, that the data packet of the application is to be sent to the user plane network element through the tunnel. In another case, the session management network element may determine, based on the indication information, that the data packet of the application is to be sent to the user plane network element through the first tunnel. For example, the session management network element receives indication information #5 from the policy control network element. The indication information #5 indicates the data packet of the application to be sent to the user plane network element through the first tunnel. The policy control network element may send, to the session management network element, the first rule carrying the indication information #5.

It should be understood that the session management network element may send the indication information #1 to the user plane network element after determining that the data packet of the application is to be sent to the user plane network element through the first tunnel.

In another possible implementation, the data packet of the application is not transmitted through the first tunnel, but is transmitted based on a user plane protocol. In this case, the first data packet is an IP packet, the first data packet includes an extension header, and the extension header includes a frame type corresponding to the service flow. In this case, the indication information #1 may specifically indicate the user plane network element to determine, based on the frame type in the extension header, the QFI corresponding to the service flow. In other words, the indication information #1 may specifically indicate the user plane network element to determine, based on the frame type carried in the extension header in the first data packet, the QFI corresponding to the service flow when the user plane network element receives the first data packet, and the first data packet includes the data packet of the application. The extension header herein is, for example, an SRV6 extension header or an IPv6 extension header. It should be understood that, in this implementation, the indication information #1 further indicates the user plane network element to determine, based on the IP header of the first data packet, the QFI corresponding to the data packet of the application. In this case, the IP header of the first data packet is used to distinguish different applications.

Optionally, the first data packet further includes frame information of a frame corresponding to the data packet of the application. The frame information herein may include one or more of the frame type, indication information #6, size information of the frame, or a QoS requirement information of the frame. The indication information #6 indicates the frame to which the data packet of the application belongs. It should be noted that the indication information #6 may be a frame number, where the frame number may identify the frame to which the data packet of the application belongs, or may identify a number of the frame and a number of the data packet of the application in the frame; or the indication information #6 is an identifier of a frame header and/or an identifier of a frame trailer. Data packets between the frame header and the frame trailer are data packets of a same frame. Alternatively, the indication information #6 indicates whether the data packet of the service flow and another data packet belong to a same frame. In other words, the indication information #6 may explicitly indicate the frame to which the data packet of the application belongs, or may implicitly indicate the frame to which the data packet of the application belongs. It should be understood that the frame information may be included in the tunnel header or the extension header.

In this case, the session management network element may send indication information #7 to the user plane network element. The indication information #7 indicates the user plane network element to use the tunnel header of the second tunnel to carry the frame information. In other words, the indication information #7 indicates the user plane network element to send the frame information to the downstream node.

It should be understood that the indication information #1, the indication information #2, the indication information #3, and the indication information #7 may be carried in a same message, or may be carried in different messages. In other words, several pieces of indication information may be simultaneously sent, or may not be simultaneously sent. This is not limited in this application.

S240: The user plane network element determines, based on the frame type, the QFI corresponding to the data packet of the application.

In an example, when the user plane network element receives the first data packet through the first tunnel, the user plane network element determines, based on the indication information #1 by using the frame type in the tunnel header in the first data packet, the QFI corresponding to the data packet of the application.

Optionally, when the first tunnel is the device-level tunnel, the user plane network element may determine, based on the IP header of the data packet of the application and the frame type of the data packet of the service data flow, the QFI corresponding to the data packet; or when the first tunnel is the application-level tunnel, the user plane network element determines, based on the identifier of the first tunnel and the frame type of the data packet of the application, the QFI corresponding to the data packet.

In another example, if the user plane network element receives the first data packet, and the frame type corresponding to the service flow is included in the extension header in the first data packet, the user plane network element determines, based on the indication information #1 by using the frame type in the extension header, the QFI corresponding to the data packet of the application.

Further, the user plane network element sends the data packet of the application through the second tunnel, and includes, in the tunnel header of the second tunnel, the QFI corresponding to the data packet of the application.

Therefore, according to the communication method provided in this embodiment of this application, the session management network element indicates the user plane network element to determine, based on the frame type corresponding to the data packet of the application, the QoS flow corresponding to the data packet, so that distinguishing processing can be performed on the data packet based on the frame type of the data packet, thereby improving user experience.

FIG. 3 is a schematic flowchart of a communication method 300 according to an embodiment of this application. The method 300 includes the following steps.

S310: A session management network element sends characteristic information of an application to a user plane network element.

Correspondingly, the user plane network element receives the characteristic information of the application from the session management network element.

For example, the characteristic information of the application is used to determine a frame type corresponding to a data packet of the application. In other words, the characteristic information of the application is characteristic information related to frame types of the application.

For example, the characteristic information of the application includes at least one of the frame types of the application, a sending rule of a frame of the application, a burst size of a frame, an interval between frames of the application, IP header information of the application, an identifier of the application, or a type of the application For example, when the application is a video application, the sending rule of the frame of the application may be a sending rule of different types of video frames. For example, if the video frames include an I frame and a P frame, the sending rule of the frame may indicate a rule of sending the I frame and the P frame. For example, the sending rule may be IPPPIPPP, that is, sending three P frames after one I frame is sent is a cycle. For example, all data packets of the application may use same IP header information, that is, a same IP address, port number, and protocol number are used; or data packets of different frame types of different applications use different IP header information. In this case, the user plane network element may determine a frame type of the data packet based on the IP header information.

S320: The session management network element sends indication information #8 to the user plane network element. The indication information #8 indicates the user plane network element to determine, based on the characteristic information of the application, the frame type corresponding to the data packet of the application.

Correspondingly, the user plane network element receives the indication information #8 from the session management network element.

Optionally, before S310, the session management network element receives a QoS parameter corresponding to the frame type, and then determines, based on the QoS parameter corresponding to the frame type, an identifier QFI of a QoS flow corresponding to the frame type.

Optionally, the session management network element sends indication information #9 to the user plane network element. The indication information #9 indicates the user plane network element to send, by using the QoS flow, the data packet corresponding to the frame type. In other words, the indication information #9 indicates the user plane network element to send, through a second tunnel, the data packet corresponding to the frame type. A tunnel header of the second tunnel includes the QFI.

Optionally, the session management network element sends indication information #10 to the user plane network element. The indication information #10 indicates the user plane network element to detect, based on the characteristic information, the frame to which the data packet of the application belongs. Optionally, the indication information #10 may further indicate the user plane network element to detect, based on the characteristic information, other frame information of the frame to which the data packet of the application belongs, for example, size information of the frame, information about a relative position (for example, a position relative to a frame header) of the data packet in the frame, and another data packet belonging to a same frame as the data packet.

It should be understood that the characteristic information of the application, the indication information #8, the indication information #9, and the indication information #10 may be carried in a same message, or may be carried in different messages. This is not limited in this application.

S330: The user plane network element determines, based on the characteristic information of the application, the frame type corresponding to the data packet of the application.

For example, if the characteristic information includes the burst size of the frames, because different frame types correspond to different burst sizes, for example, burst sizes of the I frame and the P frame are different, the user plane network element may determine, based on the burst sizes of the frames, the frame type corresponding to the data packet. Alternatively, if the characteristic information includes the identifier or the type of the application, the user plane network element may pre-obtain that the application or the application of the type includes the I frame and the P frame, and the I frame has a higher burst than the P frame (or the foregoing information in the characteristic information may be sent to the user plane network element), and the user plane network element may determine, based on the burst sizes of the frames, the frame type corresponding to the data packet. Further, if the characteristic information includes the interval between the frames and the sending rule of the frames, after determining a frame type of the first frame, the user plane network element may determine a frame type of a next frame. Therefore, after receiving a subsequent data packet, the user plane network element may determine, based on the interval between the frames and the sending rule of the frames, the frame type corresponding to the data packet.

Further, the user plane network element determines, based on the frame type, a QoS flow corresponding to the frame type.

Optionally, the user plane network element sends, based on the indication information #9, the data packet corresponding to the frame type by using the QoS flow. For example, the user plane network element sends the data packet corresponding to the frame type through the second tunnel. The data packet is encapsulated in a second data packet. The second data packet includes the tunnel header of the second tunnel. The tunnel header of the second tunnel includes frame information corresponding to the data packet and an identifier QFI of the QoS flow. The frame information herein may include one or more of the frame type, size information of the frame, a QoS requirement information of the frame, or indication information that indicates the frame to which the data packet of the application belongs.

Optionally, based on the indication information #10, the user plane network element detects, based on the characteristic information, the frame to which the data packet of the application belongs, and sends information about the frame to a downstream node. For example, the information about the frame is included in the tunnel header of the second tunnel. Optionally, the user plane network element may further detect, based on the indication information #10 by using the characteristic information, other frame information of the frame to which the data packet of the application belongs, for example, size information of the frame, information about a relative position (for example, a position relative to a frame header) of the data packet in the frame, and another data packet belonging to a same frame as the data packet, and send the information to the downstream node.

Therefore, according to the communication method in this embodiment of this application, the user plane network element is indicated to determine, based on the characteristic information of the application, the QoS flow corresponding to the data packet of the application, so that distinguishing processing can be performed on the data packet based on the frame type of the data packet, thereby improving user experience.

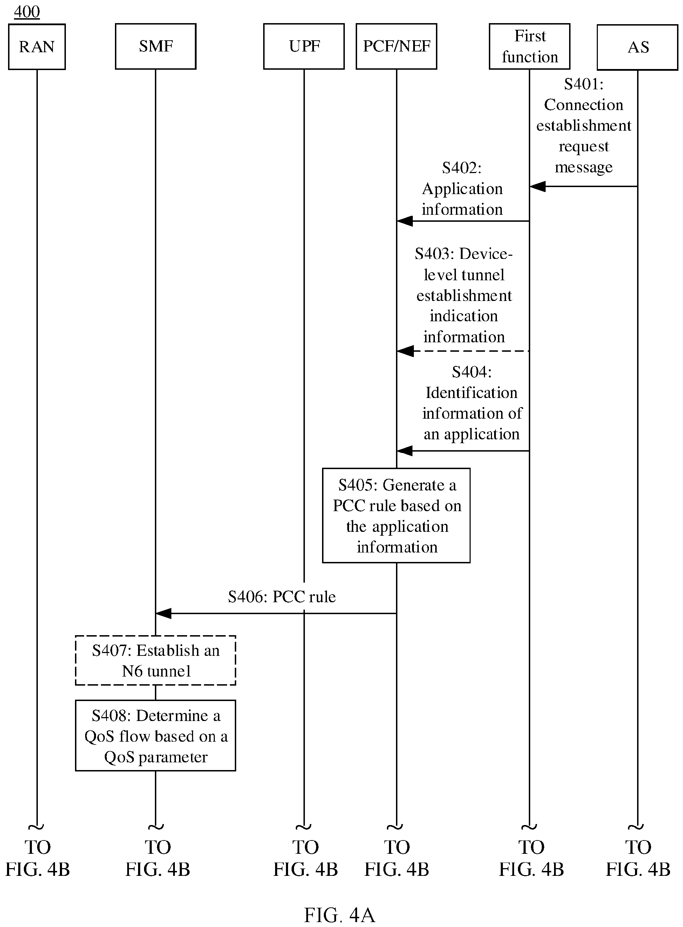

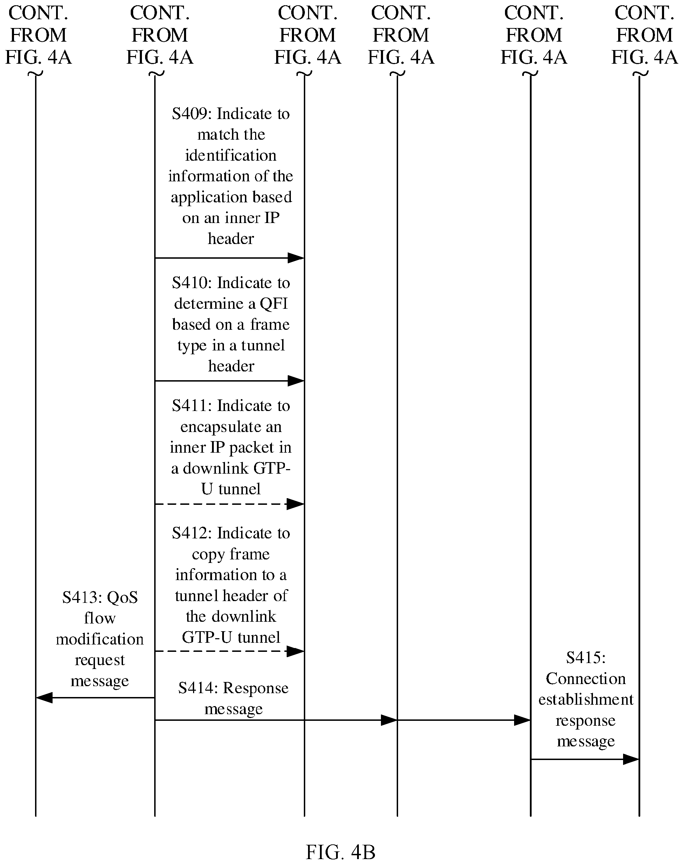

FIG. 4A and FIG. 4B are a schematic flowchart of a communication method 400 according to an embodiment of this application. The method 400 includes the following steps.

S401: An AS sends a connection establishment request message to a first function.

For example, when the AS needs to send data of an application, the AS sends the connection establishment request message to the first function. The connection establishment request message is used to request a 5G system to allocate a resource to a service flow of the application, so that QoS may be properly guaranteed when the data of the application is transmitted by using the 5G network. The first function herein may be an MEP or an AF.

Optionally, the connection establishment request message may include QoS requirement information corresponding to different frame types of the application. The connection establishment request message is used to request the first function to prepare a network resource for sending the data of the application.

Optionally, the AS invokes a first application programming interface (application programming interface, API) provided by the first function, to send the connection establishment request message. A parameter of the first API includes a frame type of the application and a corresponding QoS requirement. The parameter of the first API may further include IP header information of a data packet of the application, for example, an IP address, a port number, and a protocol number.

Optionally, the parameter of the first API may further include a type of the application (for example, an AR/VR service), whether the AF/MEP needs to process the application, a characteristic of the application, and the like.

Optionally, the AS may further request the first function to process a service flow of the application. The processing herein may be, for example, re-encoding the data of the application, or compressing the data of the application, or may be a combination of a plurality of processing manners. This is not limited herein.

S402: The first function sends application information to a PCF/NEF.

For example, the first function sends application information of the application to the PCF. The application information includes the frame type of the application and the corresponding QoS requirement.

For example, a frame corresponding to an enhanced layer service and a frame corresponding to a base layer service in the AR/VR service have different frame types, or an I frame and a P frame in the AR/VR service have different frame types. In a specific example, the first function performs, based on a request of the AS, layered encoding on a received VR video to obtain a base layer service data packet and an enhanced layer service data packet. Then, the first function separately determines QoS requirements of a base layer frame and an enhanced layer frame, and sends the QoS requirements of the base layer frame and the enhanced layer frame to the PCF/NEF by using the application information.

Optionally, in S403, if a device-level tunnel between the first function and a UPF has not been established, the first function sends device-level tunnel establishment indication information to the PCF/NEF. The indication information is used to establish the device-level tunnel between the first function and the UPF.

It should be understood that the device-level tunnel may be referred to as an N6 tunnel. The first function may send a data packet to the UPF through the N6 tunnel, and carry frame information of the data packet through the N6 tunnel.

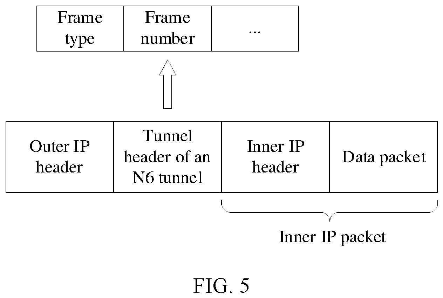

The following briefly describes a structure of an N6 tunnel with reference to FIG. 5.

A tunnel header of the N6 tunnel may be between an outer IP header and an inner IP packet. The inner IP packet may also be referred to as an inner data packet. The inner IP packet includes an inner IP header and a data packet. The inner IP header is located at a start part of the inner IP packet and is connected to the tunnel header of the N6 tunnel. When the N6 tunnel is the device-level tunnel, the inner IP header of the tunnel includes identification information of the application. The identification information of the application identifies an application to which the data packet belongs. Therefore, the UPF may identify the application based on the inner IP header. The tunnel header of the N6 tunnel may include frame information of the data packet, for example, a frame type and a frame number of a frame to which the data packet belongs. The tunnel header of the N6 tunnel may further include a tunnel identifier or another field of the N6 tunnel. This is not limited in this application.

Optionally, the first function may further indicate a type of the device-level tunnel (for example, a GRE tunnel or a GTP-U tunnel) to the PCF/NEF. A specific manner is not limited.

Optionally, the first function may send, to the PCF/NEF, indication information that indicates the data packet of the application to be sent to the UPF through the N6 tunnel.

Optionally, if the N6 tunnel is further configured to send uplink data, the first function further sends uplink tunnel identifier information (for example, an IP address and an optional tunnel identifier of the N6 tunnel on the first function) to the PCF/NEF.

It should be understood that the PCF may pre-establish the device-level tunnel in a configuration manner. If the device-level tunnel has been established, S403 may not be performed.

S404: The first function sends the identification information of the application to the PCF/NEF.

It should be understood that the identification information of the application identifies an application to which the data packet belongs, and the identification information of the application may be, for example, an application identifier of the application or a 5-tuple. It should be understood that, in some scenarios, the identification information of the application may further determine a specific service flow in the application, that is, the identification information of the application may be information identified at an application layer, or may be information identified at a service layer. This is not limited in this application.

It should be understood that the device-level tunnel is device-specific, and one device-level tunnel may correspond to a plurality of different applications. Therefore, when the data packet is transmitted through the device-level tunnel, the first function needs to send the identification information of the application to the PCF/NEF, to indicate the application corresponding to the data packet.

It should be understood that pieces of information in S402 to S404 may be carried in one message, or may be carried in different messages. This is not limited in this application.

It should be understood that the foregoing solution is described by using an example in which the AS interfaces with the first function. However, the AS may also directly interface with the PCF/NEF. When the AS directly interfaces with the PCF/NEF, the AS may directly send content such as the application information to the PCF/NEF. In other words, the solution may be directly performed from S402. In this case, the first function needs to be replaced with the AS.

S405: The PCF/NEF generates a PCC rule based on the application information.

S406: The PCF/NEF sends the PCC rule to an SMF.

For example, the PCC rule includes the identification information of the application and a QoS parameter corresponding to the frame type of the application. It should be understood that QoS parameters of the application may include QoS parameters of different frame types of the application, for example, 5QIs and PDBs of different frame types. The PCF may determine, based on the application information (the QoS requirement) of the application, the QoS parameter corresponding to the frame type of the application.

Optionally, if the N6 tunnel has not been established, the PCC rule further includes indication information for a device-level tunnel, and may further include a type of the device-level tunnel (for example, a GRE tunnel or a GTP-U tunnel).

Optionally, if the first tunnel is further configured to send uplink data, the PCC rule may further include uplink tunnel identification information and the like.

Optionally, the PCC rule may further carry indication information for sending a data packet of an application through the N6 tunnel.

If the PCC rule includes the indication information for establishing a device-level tunne, optionally, in S407, the SMF establishes the device-level tunnel between the AS and the UPF (or between the MEP and the UPF).

S408: The SMF determines a QFI based on the QoS parameter.

For example, the SMF obtains, from the PCC rule, a QoS parameter corresponding to a frame type of the application , and determines, based on the QoS parameter, the QoS flow identifier QFI corresponding to the frame type.

Specifically, the SMF creates different QoS flows based on the QoS parameters corresponding to different frame types in the PCC rule, and determines the QFI corresponding to the frame type of the application.

Further, after the SMF determines that the data packet of the application is sent to the UPF through the N6 tunnel (in other words, the data packet of the application is to be transmitted through the N6 tunnel), the SMF configures the UPF. The SMF may determine, based on configuration information, that the data packet of the application is sent to the UPF through the N6 tunnel, or the SMF determines, based on received indication information (for example, the indication information that is carried in the PCC rule and that is used to send the data packet of the application through the N6 tunnel), that the data packet of the application is sent to the UPF through the N6 tunnel. It should be understood that, in some scenarios, the data packet of the application may be a data packet of a service flow in the application.

The following describes, by using S409 to S412, an example of a solution in which the SMF configures the UPF.

S409: The SMF indicates the UPF to match, based on the inner IP header of the N6 tunnel, identification information corresponding to the application, to determine a QFI corresponding to the data packet. For example, the SMF sends indication information to the UPF. The indication information indicates the UPF to identify the application by using the inner IP header of the N6 tunnel when the UPF receives the data packet of the application through the N6 tunnel.

S410: The SMF indicates the UPF to determine, based on a frame type in the frame information carried in the tunnel header of the N6 tunnel, an identifier QFI of a QoS flow to which the data packet belongs. Specifically, the SMF may send a correspondence between the frame type of the application and the QFI to the UPF. Correspondingly, after receiving the correspondence between the frame type and the QFI, the UPF locally stores the correspondence, so that when subsequently receiving the data packet of the application through the N6 tunnel, the UPF determines, based on the frame type carried in the tunnel header, the QFI corresponding to the frame type.

It should be understood that S408 and S409 may be only one piece of indication information. The indication information indicates the UPF to determine, based on the inner IP header (that is, an IP header of the data packet of the application) and the frame type carried in the tunnel header, the QFI corresponding to the data packet of the application.

Optionally, in S411, the SMF further indicates the UPF to encapsulate the inner IP packet in a downlink GTP-U tunnel and sends the inner IP packet to the downstream node. A tunnel header of the GTP-U tunnel includes the QFI corresponding to the QoS flow. In other words, the SMF indicates the UPF to send the data packet of the application to the downstream node by using the QoS flow identified by the QFI.

Further, optionally, in S412, the SMF may further indicate the UPF to copy the frame information in the tunnel header of the N6 tunnel to a tunnel header of the downlink GTP-U tunnel, so as to send the frame information to the downstream node (for example, a base station), so that the downstream node schedules the data packet based on the frame information. The frame information may include one or more of the frame type, size information of the frame, a QoS requirement information of the frame, or indication information that indicates the frame to which the data packet of the application belongs.

It should be understood that pieces of information in S409 to S412 may be carried in a same message, or may be carried in different messages. This is not limited in this application.

Further, the SMF configures a RAN. For example:
S413: The SMF sends a QoS flow modification request message to the RAN. The QoS flow modification request message includes QoS configuration information of a plurality of QoS flows corresponding to the application .
S414: The SMF sends a response message to the first function.

For example, the SMF sends the response message to the first function by using the PCF/NEF. The response message includes information about the N6 tunnel, for example, an IP address and a tunnel identifier of the N6 tunnel.

S415: The first function sends a connection establishment response message to the AS.

For example, the first function sends the connection establishment response message to the AS. The connection establishment response message is used to respond to the connection establishment request message sent by the AS. When the N6 tunnel is established between the AS and the UPF, the AF/MEP sends the tunnel information (that is, the identifier of the N6 tunnel) to the AS.

For example, if the AS invokes the first API of the first function to send the connection establishment request message, the response message may be a response of the first API.

Further, the AS sends the data packet of the application.

When the N6 tunnel is established between the first function and the UPF, the AS sends the data packet of the application by using the first function. Correspondingly, the AS sends the data packet of the application to the first function, and the first function sends the data packet of the application to the UPF through the tunnel. Optionally, when sending the data packet of the application to the first function, the AS further sends the frame information corresponding to the data packet. After receiving the frame information, the first function carries the frame information in the tunnel header and sends the frame information to the UPF. In this manner, optionally, the AS may invoke a second API provided by the first function to send the data packet of the application. A parameter of the second API may include the data packet of the application. Optionally, the parameter of the second API may further include the frame information corresponding to the data packet of the application.

In an implementation, the first function processes the data packet of the application, for example, performs re-encoding. In this case, the first function determines the frame information, includes the frame information in the tunnel, and sends the frame information to the UPF.

When the N6 tunnel is established between the AS and the UPF, the AS carries the frame information in the tunnel header and sends the frame information to the UPF.

It should be noted that the AS may not pre-request to establish a connection, but directly request the first function to send the data packet. In this case, the QoS requirement of the frame type corresponding to the data packet is provided when the data packet is requested to be sent. Correspondingly, the parameter of the second API further includes the QoS requirement. Optionally, in this manner, the first function may include the QoS requirement as the frame information in the tunnel header and send the frame information to the UPF, and the UPF copies the frame information to the tunnel header of the second tunnel and sends the frame information to the base station.

Therefore, according to the communication method provided in this embodiment of this application, when the UPF receives a data packet of an application through the N6 tunnel, the UPF is configured to determine, based on the inner IP header of the N6 tunnel and the frame type in the frame information carried in the tunnel header of the N6 tunnel, a QoS flow corresponding to the data packet, so that distinguishing processing can be performed on the data packet based on the frame type of the data packet, thereby improving user experience. This avoids a case in which a network cannot identify a frame type of media data and distinguish between different types of data packets for processing, and consequently, a smooth user experience cannot be ensured in some cases, for example, in the case of network congestion.

For example, in an AR/VR service scenario, this type of service generates burst data with a large bandwidth. Therefore, great impact is caused to the network. When a plurality of burst data packets of a user simultaneously reach a base station, the base station may fail to process all the data packets at the moment, resulting in a deteriorated user experience. Therefore, distinguishing processing can be performed on video data of different frame types to ensure a basic user experience. For example, an AR/VR video is processed in a layered encoding manner, that is, a video stream is divided into an enhanced layer data packet and a base layer data packet. When a terminal has only received the base layer data packet but has not received any enhanced layer data packet, the user can still watch the video, but definition of the video decreases. When both the enhanced layer data packet and the base layer data packet reach the terminal device, the user can watch a video with higher definition. The base layer data packet and the enhanced layer data packet that are obtained through layered encoding belong to data packets of different frame types, and have different importance. To ensure a smooth user experience, in some cases, for example, when network congestion occurs, a system should preferentially ensure that the base layer data packet is sent to the terminal, and user experience is not affected too much even if the enhanced layer data packet is properly lost. Therefore, according to the communication method provided in this embodiment of this application, different processing priorities may be used for the enhanced layer data packet and the base layer data packet that are obtained through layered encoding, so that the base layer data packet can be preferentially ensured when network congestion occurs, thereby avoiding user experience being affected by system congestion caused by a plurality of pieces of burst data of a user watching an AR/VR video and affecting.

For another example, a frame type of a data packet of an AR/VR video includes an I frame and a P frame. The I frame is a reference frame, the P frame is a data frame, and the P frame can be decoded only by depending on the I frame. Therefore, if the I frame is lost, subsequent P frames cannot be decoded. However, discarding one P frame only affects an image of one frame. Therefore, according to the communication method provided in this embodiment of this application, different processing priorities may be used for data packets of the I frame and the P frame, so that the data packet of the I frame can be preferentially ensured when network congestion occurs, thereby avoiding user experience being affected by system congestion caused by a plurality of pieces of burst data of a user watching an AR/VR video.

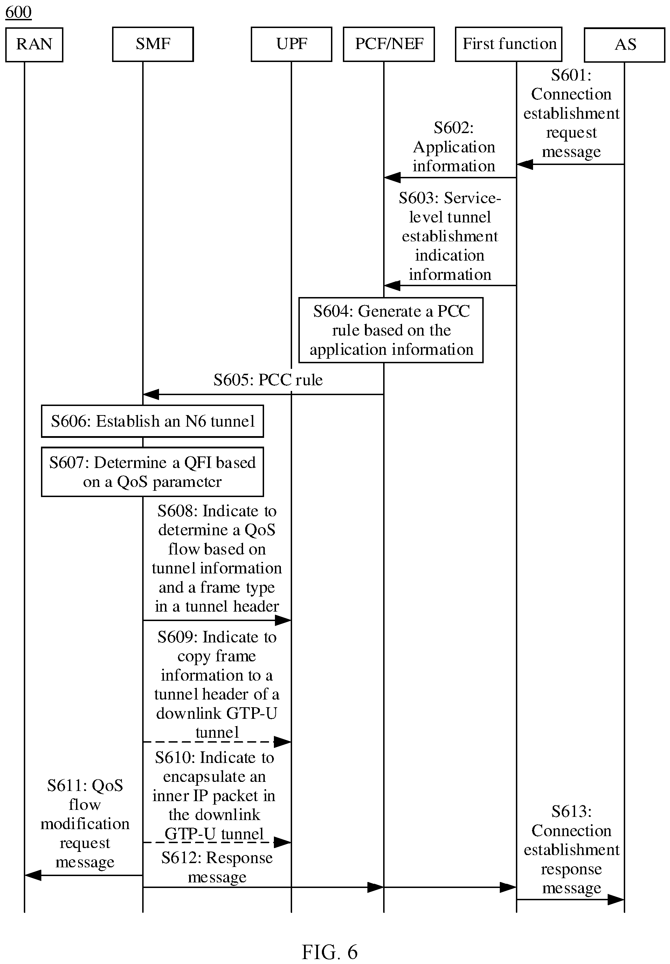

FIG. 6 is a schematic flowchart of a communication method 600 according to an embodiment of this application. The method 600 includes the following steps.

S601: An AS sends a connection establishment request message to a first function.

S602: The first function sends application information to a PCF.

It should be understood that S601 to S602 are similar to S401 to S402 in the method 400, and details are not described again in this application.

S603: The first function sends indication information for establishing the application-level tunnel to the PCF/NEF. The indication information is used to establish an application-level tunnel between the first function and a UPF.

It should be understood that the application-level tunnel may be referred to as an N6 tunnel. The AS may send a data packet to the UPF through the N6 tunnel, and carry frame information of the data packet through the N6 tunnel.

S604: The PCF/NEF generates a PCC rule based on the application information.

S605: The PCF/NEF sends the PCC rule to an SMF.

For example, the PCC rule includes the indication information for establishing the application-level tunnel. Further, a type of the application-level tunnel (for example, a GRE tunnel or a GTP-U tunnel) may be further included.

Optionally, if the N6 tunnel is further configured to send uplink data, the PCC rule may further include uplink tunnel identification information and the like.

Optionally, the PCC rule may further carry indication information for sending a data packet of an application through the N6 tunnel.

It should be understood that the application-level tunnel is application-specific, that is, the application-level tunnel corresponds to only one service, and different applications may be distinguished based on tunnels. Therefore, when the first function indicates the PCF/NEF to establish the N6 tunnel as the application-level tunnel, the first function does not need to send identification information of the application to the PCF/NEF.

S606: The SMF establishes the N6 tunnel.

For example, the SMF establishes the application-level tunnel between the first function and the UPF based on the indication information for creating the application-level tunnel in the PCC rule.

Further, the SMF obtains tunnel information of the N6 tunnel (including an IP address and a logical tunnel identifier) for the application. For example, the SMF obtains the tunnel information of the N6 tunnel from the UPF.

It should be understood that the application-level tunnel is application-specific. Therefore, the UPF may determine, based on the tunnel information of the N6 tunnel, an application to which the data packet belongs.

S607: The SMF determines, based on a QoS parameter corresponding to a frame type of the application, a QFI corresponding to the frame type.

S607 is similar to S408 in the method 400. For brevity, details are not described again.

Further, after the SMF determines that the data packet of the application is sent to the UPF through the N6 tunnel (in other words, the data packet of the application is to be transmitted through the N6 tunnel), the SMF configures the UPF. The SMF may determine, based on configuration information, that the data packet of the application is sent to the UPF through the N6 tunnel, or the SMF determines, based on received indication information (for example, indication information that is carried in the PCC rule and that is used to send the data packet of the application through the N6 tunnel), that the data packet of the application is sent to the UPF through the N6 tunnel.

The following describes, by using S608 to S610, an example of a solution in which the SMF configures the UPF.

S608: The SMF indicates the UPF to determine, based on the tunnel information and the frame information (for example, the frame type) in a tunnel header, a QoS flow corresponding to the data packet.

For example, the SMF sends indication information to the UPF. The indication information indicates the UPF to: when receiving the data packet of the application through the N6 tunnel, determine, based on the tunnel information of the N6 tunnel, an application to which the data packet belongs, and determine, based on the frame type carried in the tunnel header of the N6 tunnel, a QoS flow to which the data packet belongs (that is, determining a QFI corresponding to the QoS flow).

Further, optionally, in S609, the SMF may further indicate the UPF to copy the frame information in the tunnel header of the N6 tunnel to a tunnel header of a downlink GTP-U tunnel, so as to send the frame information to a downstream node (for example, a base station), so that the downstream node schedules the data packet based on a frame number. The SMF may further indicate the UPF to copy other information in the frame information to the tunnel header of the GTP-U tunnel. This is not limited in this application.

Optionally, in S610, the SMF further indicates the UPF to encapsulate an inner IP packet in the downlink GTP-U tunnel and sends the inner IP packet to the downstream node. The tunnel header of the GTP-U tunnel includes the QFI corresponding to the QoS flow.

It should be understood that S611 to S613 are similar to S412 to S415 in the method 400. For brevity, details are not described again.

Therefore, according to the communication method provided in this embodiment of this application, when the UPF receives a data packet of an application through the N6 tunnel, the UPF is configured to determine, based on the tunnel information of the N6 tunnel and the frame type carried in the tunnel header of the N6 tunnel, a QoS flow corresponding to the data packet, so that distinguishing processing can be performed on data packets of different frame types, thereby improving user experience.

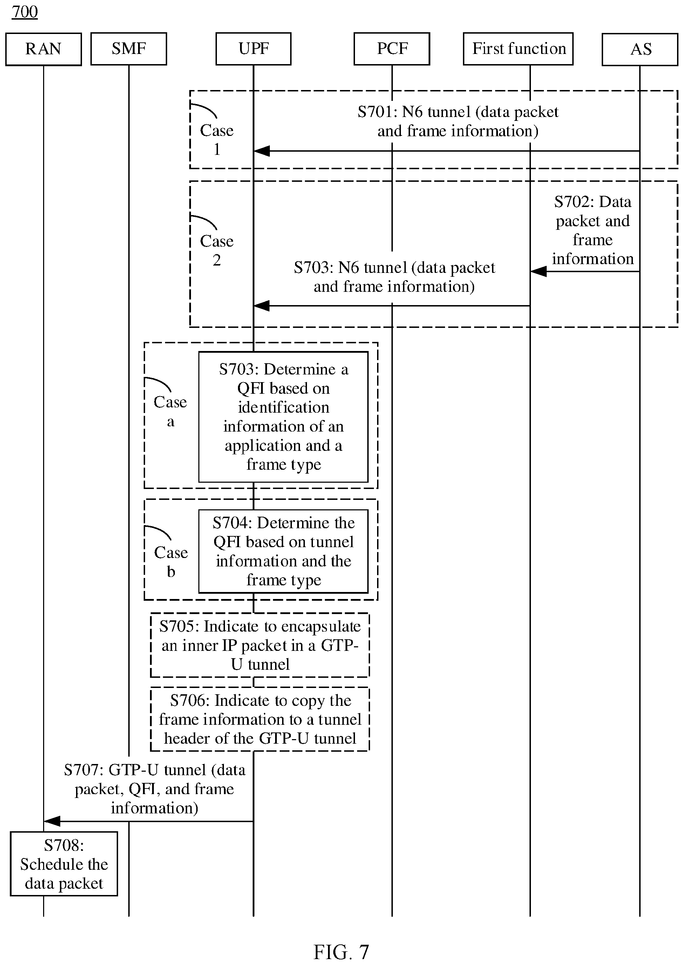

FIG. 7 is a schematic flowchart of a communication method 700 according to an embodiment of this application. It should be understood that the method 700 may be combined with the method 400 or the method 600, that is, the method 700 may be performed after the method 400 or the method 600, or may be performed independently. The method 700 includes the following steps.

First, an AS sends a data packet through an N6 tunnel.

In a possible case, when the N6 tunnel is between the AS and a UPF (denoted as case 1), in S701, the AS sends the data packet to the UPF through the N6 tunnel.

For example, the AS encapsulates an original data packet in the N6 tunnel, and includes frame information of the data packet in a tunnel header of the N6 tunnel, for example, information such as a frame type and a frame number corresponding to the data packet. The AS directly sends the data packet and media information corresponding to the data packet to the UPF through the N6 tunnel.

In another possible case, when the N6 tunnel is between a first function and the UPF (denoted as case 2), in S702, the AS first sends the data packet and the frame information to the first function, and in S703, the first function sends the data packet to the UPF through the N6 tunnel.

For example, the first function receives the data packet and the frame information corresponding to the data packet from the AS, encapsulates the data packet in the N6 tunnel, and includes, in the tunnel header of the N6 tunnel, the frame information corresponding to the data packet, for example, information such as a frame type and a frame number corresponding to the data packet. The AS sends the data packet and the frame information corresponding to the data packet to the UPF through the N6 tunnel.

Optionally, in case 2, the first function may further perform application layer processing on the data packet sent by the AS, for example, re-encode the data packet. In this case, the first function encapsulates a processed data packet in the N6 tunnel, and includes, in the tunnel header of the N6 tunnel, frame information corresponding to the processed data packet.

Further, the UPF determines a QoS flow corresponding to the data packet.

In a possible case, when the N6 tunnel is a device-level tunnel (denoted as case a), in S703, the UPF determines a QFI based on identification information of an application and the frame type.

For example, the UPF receives, through the N6 tunnel, the data packet sent by the first function/AS, obtains the identification information of the application by using an inner IP header of the N6 tunnel, and determines, based on the identification information of the application, an application corresponding to the data packet. The UPF obtains, from the tunnel header of the N6 tunnel, the frame type corresponding to the data packet, and determines, based on the frame type and the identification information of the application, the identifier QFI of the QoS flow corresponding to the data packet.

In another possible case, when the N6 tunnel is an application-level tunnel (denoted as case b), in S704, the UPF determines the QFI based on a tunnel identifier and the frame type.

For example, the UPF receives, through the N6 tunnel, the data packet sent by the first function/AS. Because the application-level tunnel is application-specific, the UPF may determine, based on the tunnel information of the N6 tunnel, an application corresponding to the data packet. The UPF obtains, from the tunnel header of the N6 tunnel, the frame type corresponding to the data packet, and determines, based on the frame type and the tunnel information of the N6 tunnel, the QFI corresponding to the data packet.

Further, the UPF sends the data packet of the application to a RAN.

Optionally, in S705, the UPF encapsulates an inner IP packet in a GTP-U tunnel.

Optionally, in S706, the UPF copies the frame information to a tunnel header of the GTP-U tunnel.

For example, the tunnel header of the N6 tunnel further includes frame information of the frame corresponding to the data packet of the application. The UPF copies the frame information in the tunnel header of the N6 tunnel to the tunnel header of the GTP-U tunnel.

Then, in S707, the UPF sends the data packet of the application to the RAN through the GTP-U tunnel. The GTP-U tunnel carries the QFI corresponding to the data packet.

S708: The RAN schedules the data packet.

For example, the RAN receives the data packet from the UPF through the GTP-U tunnel, and determines, based on the QFI corresponding to the data packet, a QoS parameter of the QoS flow corresponding to the data packet. Then, the RAN schedules the data packet based on the QoS parameter.

If the GTP-U tunnel carries information such as the frame number corresponding to the data packet, for example, the tunnel header of the GTP-U tunnel carries a frame identifier, the RAN may schedule a frame granularity. For example, when a packet loss rate of a frame exceeds a threshold, the RAN may discard subsequent data packets in the frame. The RAN may further perform scheduling based on a QoS parameter corresponding to the frame. For example, the RAN performs scheduling based on a PDB corresponding to the frame, and discards a data packet that is in the frame and of which a processing delay in the RAN exceeds the PDB.

Therefore, according to the communication method provided in this embodiment of this application, when the UPF receives a data packet of an application through the N6 tunnel, the UPF determines, based on the tunnel information of the N6 tunnel and a frame type in the media information carried in the tunnel header, a QoS flow corresponding to the data packet, and sends the data packet to a downstream node by using the QoS flow, so that a network side can perform distinguishing processing on the data packet based on the frame type of the data packet, thereby improving user experience. This avoids a case in which a network cannot perform distinguishing processing on different types of data because the network cannot identify a frame type of media data, and consequently, a smooth user experience cannot be ensured in some cases, for example, in the case of network congestion or insufficient resources.

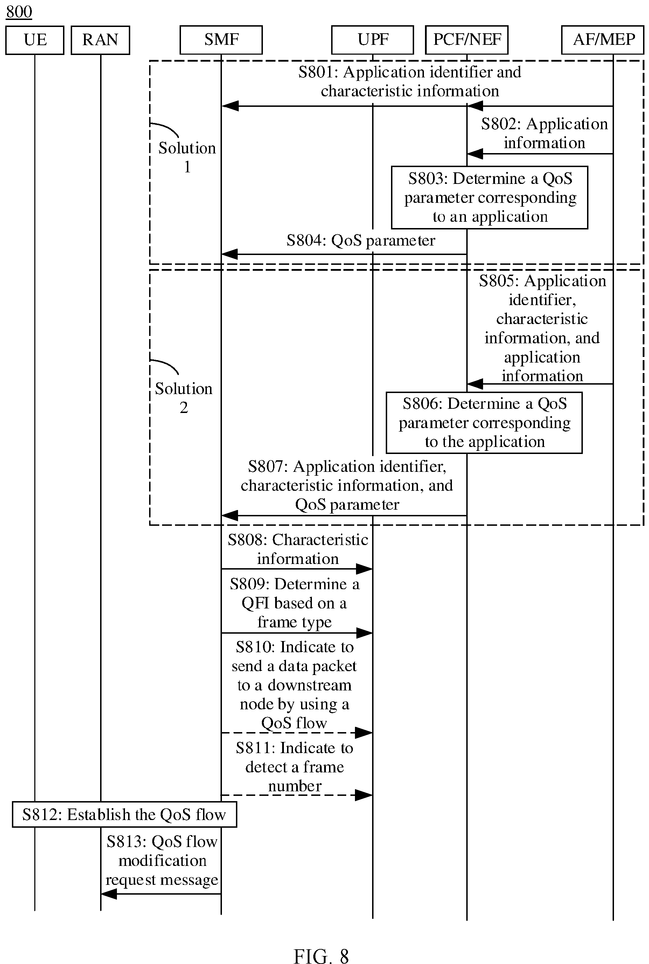

FIG. 8 is a schematic flowchart of a communication method 800 according to an embodiment of this application. The method 800 includes the following steps.

S801: A first function sends an application identifier and characteristic information to an SMF.

For example, when an AS needs to send data of an application, the AS sends the application identifier of the application and the characteristic information to the first function. Then, the first function sends the application identifier and the characteristic information of frames to the SMF by using a PCF/NEF.

The characteristic information of the frames may include a sending rule of the frames. For example, the sending rule of the frames may be IPPP IPPP IPPP..., where I represents an I frame, and P represents a P frame. Therefore, the sending rule of the frames herein is that data of the I frame is sent once, data of the P frame is sent three times, and then such a sending manner is repeated. The characteristic information of the frames may further include burst sizes of the frames, for example, a burst size of the I frame and a burst size of the P frame. The characteristic information of the frames may further include an interval between the frames. When media frames are divided into enhanced layer frames and base layer frames, the characteristic information of the frames may include characteristics information of the enhanced layer frames and characteristics information of the base layer frames, for example, a sending rule of the enhanced layer frames and a sending rule of the base layer frames, burst sizes of the enhanced layer frames, burst sizes of the base layer frames, an interval between the enhanced layer frames, and an interval between the base layer frames.

It should be understood that the foregoing solution is described by using an example in which the AS interfaces with the first function. However, the AS may also directly interface with the PCF/NEF. When the AS directly interfaces with the PCF/NEF, the AS may directly send the application identifier of the application and the characteristic information to the PCF/NEF.

S802: The first function sends application information to the PCF/NEF.

For example, after the application is started, the AS sends the application information of the application to the PCF/NEF by using the first function. The application information includes the application identifier of the application and a QoS requirement information of the application.

Based on the QoS requirement of the application, the first function may indicate QoS requirements of different frame types. For example, a data packet corresponding to an enhanced layer service and a data packet corresponding to a base layer service in an AR/VR service correspond to different frame types, or a data packet of an I frame and a data packet of a P frame in the AR/VR service also correspond to different frame types. In a specific example, the first function performs, based on a request of the AS, layered encoding on a received VR video to obtain a base layer service data packet and an enhanced layer service data packet. Then, the first function separately determines QoS requirements of the base layer service data packet and the enhanced layer service data packet, and sends the QoS requirements of the base layer service data packet and the enhanced layer service data packet to the PCF/NEF by using the application information.

S803: The PCF/NEF determines a QoS parameter corresponding to the application.

For example, the PCF determines, based on the application information of the application, a QoS parameter corresponding to a frame type of the application. The QoS parameter of the application may include QoS parameters of different frame types of the application. For example, if the application information of the application includes QoS requirements corresponding to the enhanced layer frames and QoS requirements corresponding to the base layer frames, the PCF determines, based on the foregoing information, QoS parameters corresponding to the enhanced layer frames and QoS parameters corresponding to the base layer frames. Further:

In S804, the PCF/NEF sends the QoS parameter of the application to the SMF.

In another possible solution (denoted as solution 2), the AF may send an application identifier, characteristic information, and a QoS requirement together to the PCF/NEF. For example:
S805: The first function sends the application identifier of the application, the characteristic information of the application, and the application information of the application to the PCF/NEF. The application information of the application includes the QoS requirement of the application.
S806: The PCF/NEF determines the QoS parameter corresponding to the frame type of the application. A specific solution is similar to that in S803, and details are not described again.
S807: The PCF/NEF sends, to the SMF, the application identifier of the application, the characteristic information of the application, and the QoS parameter corresponding to the frame type of the application.

Further, the SMF configures a UPF, so that the UPF can determine a frame type of a data packet when receiving the data packet. The following describes, by using S808 to S811, an example of a solution in which the SMF configures the UPF.

S808: The SMF sends the characteristic information to the UPF. It should be understood that the characteristic information is used by the UPF to determine the frame type to which the data packet belongs.

S809: The SMF indicates the UPF to determine a QFI based on the frame type, that is, determine a QoS flow corresponding to the data packet.

S810: The SMF indicates the UPF to send the data packet to a downstream node by using the QoS flow. Specifically, the SMF may indicate the UPF to encapsulate the data packet in a downlink GTP-U tunnel after receiving the data packet of the application . A tunnel header of the GTP-U tunnel should include the QFI corresponding to the data packet. Further, the UPF sends an encapsulated data packet to a downstream node, where the downstream node may be a RAN.

S811: The SMF indicates the UPF to detect a frame number. For example, the SMF indicates the UPF to detect, based on the characteristic information, the frame number corresponding to the data packet.

S812: The SMF establishes the QoS flow.

For example, the SMF establishes the QoS flow based on the QoS parameter of the application . It should be understood that when QoS parameters received by the SMF are QoS parameters corresponding to different frame types of the application, the SMF creates different QoS flows based on the QoS parameters of the frame types.

Further, the SMF configures the RAN. For example:

S813: the SMF sends a QoS flow modification request message to the RAN. Optionally, the QoS flow modification request message includes QoS configuration information of a plurality of QoS flows corresponding to the application.

Therefore, according to the communication method provided in this embodiment of this application, the UPF is configured to determine the frame type of the data packet based on the characteristic information of the application, and indicate the UPF to determine, based on the frame type, the QoS flow corresponding to the data packet, so that distinguishing processing can be performed on data packets of different frame types, thereby improving user experience.

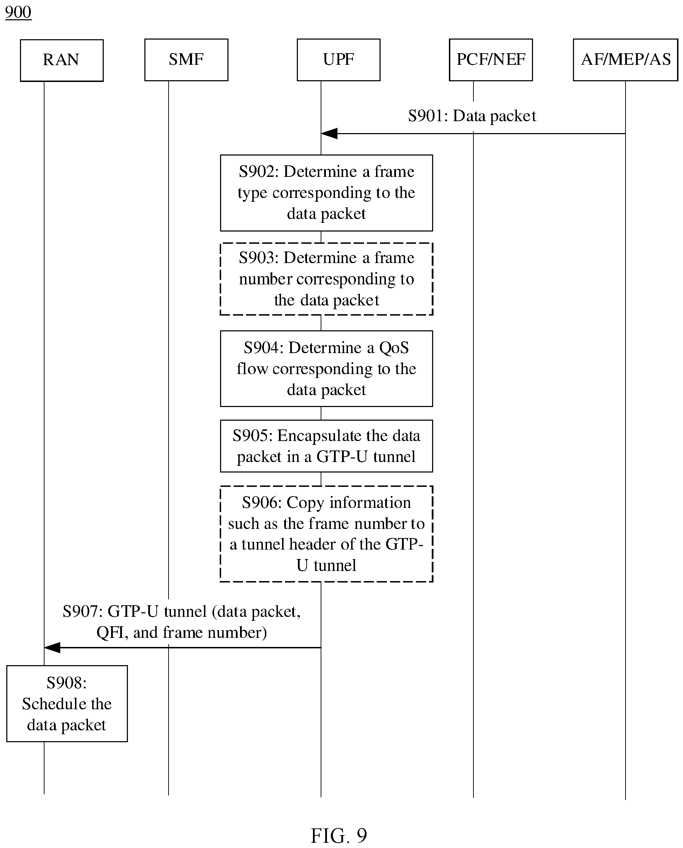

FIG. 9 is a schematic flowchart of a communication method 900 according to an embodiment of this application. It should be understood that the method 900 may be combined with the method 800, that is, the method 900 may be performed after the method 800, or may be performed independently. The method 900 includes the following steps.

S901: A UPF receives a downlink data packet.

For example, the UPF receives a data packet of a application from an AF/MEP/AS.

S902: The UPF determines a frame type corresponding to the data packet.

In a possible implementation, the UPF determines, based on characteristic information, the frame type corresponding to the data packet.

For example, if the characteristic information includes burst sizes of frames, because different frame types correspond to different burst sizes, for example, burst sizes of an I frame and a P frame are different, the UPF may determine, based on the burst sizes of the frames, the frame type corresponding to the data packet. Further, if the characteristic information includes an interval between the frames and a sending rule of the frames, after the UPF determines a frame type of the first frame, the UPF may determine a frame type of the next frame. Therefore, after receiving a subsequent data packet, the UPF may determine, based on the interval between the frames and the sending rule of the frames, the frame type corresponding to the data packet.

It should be understood that in this implementation, the UPF pre-stores the characteristic information of the application, and the characteristic information is associated with an application identifier of the application. For example, in the method 800, the characteristic information of the application sent by the SMF to the UPF is an identifier of the application. After the UPF receives a data packet of the application, the UPF obtains the characteristic information of the application from a local storage based on the identifier of the application, and then determines, based on the characteristic information, the frame type corresponding to the data packet.

In another possible implementation, the UPF determines the frame type by using information carried in the data packet.

It should be understood that in this implementation, an application layer field of the data packet sent in S901 carries information about the frame type of the data packet, and the UPF may obtain, by parsing the data packet, the frame type corresponding to the data packet. In other words, data of the application is encapsulated in a data packet. The data packet carries an extension header, and the extension header carries the frame type of the data packet. The UPF may obtain, from the extension header in the data packet, the frame type corresponding to the data packet. The extension header herein is, for example, an SRV6 extension header or an IPv6 extension header.

Optionally, in S903, the UPF determines a frame number corresponding to the data packet.

In a possible implementation, the UPF determines, based on the characteristic information, the frame number corresponding to the data packet. For example, after determining the first frame, the UPF may determine a next frame based on the interval between the frames and the sending rule of the frames, and mark a same frame number for all data packets of the next frame.

In another possible implementation, the UPF determines the frame number based on information carried in the data packet. It should be understood that, in this implementation, the data packet sent in S901 carries information about the frame number of the data packet, and the UPF may determine, based on a type of the application, a position carried in the frame number, and may obtain, by parsing the data packet, the frame number corresponding to the data packet. For example, an extension field of the data packet carries the information about the frame number.

S904: The UPF determines a QoS flow corresponding to the data packet.

For example, the UPF determines, based on the frame type corresponding to the data packet, the QoS flow corresponding to the data packet (that is, the UPF determines a QFI).

Further, the UPF sends the data packet of the application to a downstream node by using the QoS flow. For example:
S905: The UPF encapsulates the data packet in a downlink GTP-U tunnel. A tunnel header of the GTP-U tunnel includes the QFI determined in S904.

Optionally, if the UPF further determines information such as the frame number, in S906, the UPF copies the information such as the frame number to the tunnel header of the GTP-U tunnel.

S907: The UPF sends the data packet to a RAN through the GTP-U tunnel.

S908: The RAN schedules the data packet.

S908 is similar to S708 in the method 700, and details are not described herein again in this application.

Therefore, according to the communication method provided in this embodiment of this application, after the UPF receives the data packet of the application , the UPF determines, based on the characteristic information of the application, the frame type corresponding to the data packet, or the UPF determines, based on the information carried in the data packet, the frame type corresponding to the data packet, determines, based on the frame type, the QoS flow corresponding to the data packet, and sends the data packet to the downstream node by using the QoS flow, so that a network side can perform distinguishing processing on the data packet based on the frame type of the data packet, thereby improving user experience. This avoids a case in which a network cannot perform distinguishing processing on different types of data because the network cannot identify a frame type of media data, and consequently, a smooth user experience cannot be ensured in some cases, for example, in the case of network congestion or insufficient resources.

Embodiments described in this specification may be independent solutions, or may be combined based on internal logic. All these solutions fall within the protection scope of this application. For example, the method 400 and the method 700 may be used in combination, or may be used independently. For another example, the method 800 may be used independently, or may be used as preparation work for the method 900, or the like.

It may be understood that in the foregoing method embodiments, the methods and operations implemented by a network device (for example, network elements) may alternatively be implemented by a component (for example, a chip or a circuit) that can be used in the network device.

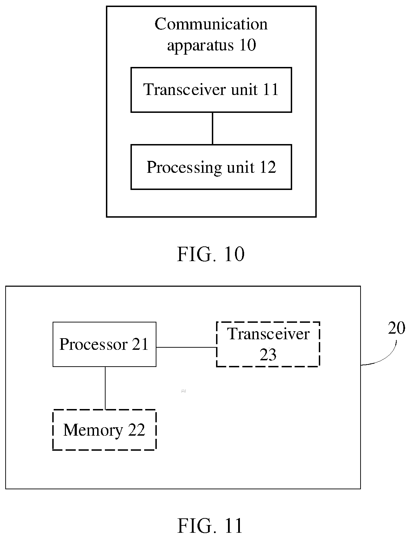

The foregoing describes the methods provided in embodiments of this application in detail with reference to FIG. 2 to FIG. 9. The following describes apparatuses provided in embodiments of this application with reference to FIG. 10 and FIG. 11. It should be understood that descriptions of apparatus embodiments correspond to the descriptions of the method embodiments. Therefore, for content that is not described in detail, refer to the foregoing method embodiments. For brevity, details are not described herein again.

FIG. 10 is a schematic block diagram of a communication apparatus 10 according to an embodiment of this application. The communication apparatus 10 includes a transceiver unit 11 and a processing unit 12. The transceiver unit 11 may implement a corresponding communication function, and the processing unit 12 is configured to process data. The transceiver unit 11 may also be referred to as a communication interface or a communication unit.

Optionally, the apparatus 10 may further include a storage unit. The storage unit may be configured to store instructions and/or data. The processing unit 12 may read the instructions and/or data in the storage unit, so that the apparatus implements the foregoing method embodiments.

The apparatus 10 may be configured to perform an action performed by the network device (for example, network elements, which may be specifically a session management network element, a user plane network element, or the like) in the foregoing method embodiments. In this case, the apparatus 10 may be a network device or a component that may be configured in the network device. The transceiver unit 11 is configured to perform receiving-related and sending-related operations performed by a network device side in the foregoing method embodiments. The processing unit 12 is configured to perform processing-related operations performed by the network device side in the foregoing method embodiments.

In a design, the apparatus 10 is configured to perform actions performed by the session management network element (or the SMF) in the foregoing embodiments.

In a possible implementation, the processing unit 12 is configured to obtain a first rule. The first rule includes a quality of service QoS parameter corresponding to a frame type of an application. The transceiver unit 11 is configured to send first indication information to the user plane network element according to the first rule. The first indication information indicates the user plane network element to determine, based on the frame type, a QoS flow identifier QFI corresponding to a data packet of the application. The service flow is a service flow of the application. The data packet of the application is encapsulated in a first data packet. The first data packet includes the frame type.

In another possible implementation, the transceiver unit 11 is configured to send characteristic information of the application to the user plane network element. The transceiver unit 11 is further configured to send seventh indication information to the user plane network element. The seventh indication information indicates the user plane network element to determine, based on the characteristic information, a frame type corresponding to a data packet of the application. The characteristic information includes at least one of a sending rule of a frame of the application, a burst size of a frame of the application, or an interval between frames of the application.

The apparatus 10 may implement steps or procedures performed by the session management network element (or the SMF) in the method embodiments of embodiments of this application. The apparatus 10 may include units configured to perform the methods performed by the session management network element (or the SMF) in the method embodiments. In addition, the units in the apparatus 10 and the foregoing other operations and/or functions are separately used to implement corresponding procedures performed by the session management network element (or the SMF) in the method embodiments.

When the apparatus 10 is configured to perform the method 200 in FIG. 2, the transceiver unit 11 may be configured to perform receiving and sending steps in the method 200, for example, step S220, and the processing unit 12 may be configured to perform a processing step in the method 200, for example, step S210.

When the apparatus 10 is configured to perform the method 300 in FIG. 3, the transceiver unit 11 may be configured to perform steps S310 and S320 in the method 300.

When the apparatus 10 is configured to perform the method 400 in FIG. 4A and FIG. 4B, the transceiver unit 11 may be configured to perform steps S409 to S414 in the method 400, and the processing unit 12 may be configured to perform processing steps in the method 400, for example, steps S407 and S408.

When the apparatus 10 is configured to perform the method 600 in FIG. 6, the transceiver unit 11 may be configured to perform steps S608 to S612 in the method 600, and the processing unit 12 may be configured to perform processing steps in the method 600, for example, steps S606 and S607.

When the apparatus 10 is configured to perform the method 800 in FIG. 8, the transceiver unit 11 may be configured to perform steps S801, S804, S807 to S811, and S813 in the method 800, and the processing unit 12 may be configured to perform a processing step in the method 800, for example, step S812.

It should be understood that a specific process in which the units perform the foregoing corresponding steps is described in detail in the foregoing method embodiments. For brevity, details are not described herein again.

In another design, the apparatus 10 is configured to perform actions performed by the user plane network element (or the UPF) in the foregoing method embodiments.

In a possible implementation, the transceiver unit 11 is configured to receive a first data packet. The first data packet includes a data packet of an application and a frame type corresponding to the data packet of the application. The processing unit 12 is configured to determine, based on the frame type, a QoS flow identifier QFI corresponding to the data packet of the application.

In another possible implementation, the transceiver unit 11 is configured to receive characteristic information of the application. The transceiver unit 11 is further configured to determine, based on the characteristic information of the application, the frame type corresponding to the data packet of the application. The characteristic information includes at least one of a sending rule of a frame of the application, a burst size of a frame of the application, or an interval between frames of the application.

The apparatus 10 may implement steps or procedures performed by the user plane network element (or the UPF) in the method embodiments according to embodiments of this application. The apparatus 10 may include units configured to perform the methods performed by the user plane network element (or the UPF) in the method embodiments. In addition, the units in the apparatus 10 and the foregoing other operations and/or functions are separately used to implement corresponding procedures performed by the user plane network element (or the UPF) in the method embodiments.

When the apparatus 10 is configured to perform the method 200 in FIG. 2, the transceiver unit 11 may be configured to perform steps S220 and S230 in the method 200, and the processing unit 12 may be configured to perform a processing step in the method 200, for example, step S240.

When the apparatus 10 is configured to perform the method 300 in FIG. 3, the transceiver unit 11 may be configured to perform steps S310 and S320 in the method 300, and the processing unit 12 may be configured to perform a processing step in the method 300, for example, step S330.

When the apparatus 10 is configured to perform the method 400 in FIG. 4A and FIG. 4B, the transceiver unit 11 may be configured to perform steps S409 to S412 in the method 400.

When the apparatus 10 is configured to perform the method 600 in FIG. 6, the transceiver unit 11 may be configured to perform steps S608 to S610 in the method 600.

When the apparatus 10 is configured to perform the method 700 in FIG. 7, the transceiver unit 11 may be configured to perform steps S701, S703, and S707 in the method 700, and the processing unit 12 may be configured to perform processing steps in the method 700, for example, steps S703 to S706.

When the apparatus 10 is configured to perform the method 800 in FIG. 8, the transceiver unit 11 may be configured to perform steps S807 to S811 in the method 800.

When the apparatus 10 is configured to perform the method 900 in FIG. 9, the transceiver unit 11 may be configured to perform steps S901 and S907 in the method 900, and the processing unit 12 may be configured to perform processing steps in the method 900, for example, steps S902 to S906.

It should be understood that a specific process in which the units perform the foregoing corresponding steps is described in detail in the foregoing method embodiments. For brevity, details are not described herein again.

In another design, the apparatus 10 is configured to perform actions performed by the policy control network element (or the PCF) in the foregoing method embodiments.

In a possible implementation, the transceiver unit 11 is configured to receive information about an application. The information about the application includes a frame type of the application. The transceiver unit 11 is further configured to send, to a session management network element, a quality of service QoS parameter corresponding to the frame type.

The apparatus 10 may implement steps or procedures performed by the policy control network element (or the PCF) in the method embodiments according to embodiments of this application. The apparatus 10 may include units configured to perform the methods performed by the policy control network element (or the PCF) in the method embodiments. In addition, the units in the apparatus 10 and the foregoing other operations and/or functions are separately used to implement corresponding procedures performed by the policy control network element (or the PCF) in the method embodiments.

When the apparatus 10 is configured to perform the method 400 in FIG. 4A and FIG. 4B, the transceiver unit 11 may be configured to perform steps S402 to S404 and S406 in the method 400, and the processing unit 12 may be configured to perform a processing step in the method 400, for example, S405.

When the apparatus 10 is configured to perform the method 600 in FIG. 6, the transceiver unit 11 may be configured to perform steps S602 and S603 in the method 600, and the processing unit 12 may be configured to perform a processing step in the method 600, for example, S604.

When the apparatus 10 is configured to perform the method 800 in FIG. 8, the transceiver unit 11 may be configured to perform steps S801, S802, and S805 in the method 800, and the processing unit 12 may be configured to perform a processing step in the method 800, for example, S803 or S806.

It should be understood that a specific process in which the units perform the foregoing corresponding steps is described in detail in the foregoing method embodiments. For brevity, details are not described herein again.

The processing unit 12 in the foregoing embodiments may be implemented by at least one processor or a processor-related circuit. The transceiver unit 11 may be implemented by using a transceiver or a transceiver-related circuit. The storage unit may be implemented by at least one memory.

As shown in FIG. 11, an embodiment of this application further provides an apparatus 20. The apparatus 20 includes a processor 21. The processor 21 is coupled to a memory 22. The memory 22 is configured to store a computer program or instructions and/or data. The processor 21 is configured to execute the computer program or the instructions and/or the data stored in the memory 22, so that the methods in the foregoing method embodiments are performed.

Optionally, the apparatus 20 includes one or more processors 21.

Optionally, as shown in FIG. 11, the apparatus 20 may further include the memory 22.

Optionally, the apparatus 20 may include one or more memories 22.

Optionally, the memory 22 and the processor 21 may be integrated or disposed separately.

Optionally, as shown in FIG. 11, the apparatus 20 may further include a transceiver 23. The transceiver 23 is configured to receive and/or send a signal. For example, the processor 21 is configured to control the transceiver 23 to receive and/or send a signal.

In a solution, the apparatus 20 is configured to implement operations performed by the network device (for example, the foregoing network elements) in the foregoing method embodiments.

An embodiment of this application further provides an apparatus 30. The apparatus 30 may be a network device or a chip. The apparatus 30 may be configured to perform operations performed by the network device (for example, the foregoing network elements) in the foregoing method embodiments.

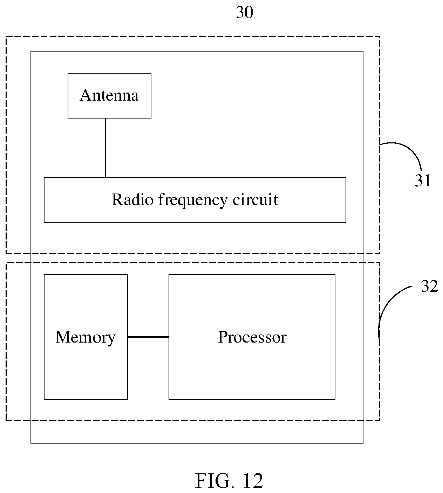

FIG. 12 is a simplified schematic diagram of a structure. The apparatus 30 may include a part 31 and a part 32. The part 31 is mainly configured to: receive and send a radio frequency signal, and perform conversion between the radio frequency signal and a baseband signal. The part 32 is mainly configured to: perform baseband processing, control a base station, and the like. The part 31 may usually be referred to as a transceiver unit, a transceiver device, a transceiver circuit, a transceiver, or the like. The part 32 is usually a control center of the base station, may be usually referred to as a processing unit, and is configured to control the base station to perform processing operations performed by a receiving side in the foregoing method embodiments.

The transceiver unit in the part 31 may also be referred to as a transceiver device, a transceiver, or the like. The transceiver unit includes an antenna and a radio frequency circuit. The radio frequency circuit is mainly configured to perform radio frequency processing. Optionally, a component that is in the part 31 and that is configured to implement a receiving function may be considered as a receiving unit. A component configured to implement a sending function may be considered as a sending unit. That is, the part 31 includes the receiving unit and the sending unit. The receiving unit may also be referred to as a receiving machine, a receiver, a receiving circuit, or the like. The sending unit may be referred to as a transmitter machine, a transmitter, a transmitter circuit, or the like.

The part 32 may include one or more boards, and each board may include one or more processors and one or more memories. The processor is configured to read and execute a program in the memory, to implement a baseband processing function and control a base station. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

It should be understood that FIG. 12 is merely an example instead of a limitation. The network device including the transceiver unit and the processing unit may not depend on the structure shown in FIG. 12.

When the apparatus 30 is a chip, the chip includes a transceiver unit and a processing unit. The transceiver unit may be an input/output circuit or a communication interface. The processing unit is a processor, a microprocessor, or an integrated circuit integrated on the chip. Certainly, the apparatus 30 may also be a chip system or a processing system, so that a device in which the apparatus 30 is installed can implement the methods and the functions in embodiments of this application. For example, a processing unit 32 may be a processing circuit in the chip system or the processing system, to control a device in which the chip system or the processing system is installed. The processing unit 32 may further be coupled to a storage unit, and invoke instructions in the storage unit, so that the device can implement the methods and the functions in embodiments of this application. A transceiver unit 31 may be an input/output circuit in the chip system or the processing system, to output information processed by the chip system, or input to-be-processed data or signaling information to the chip system for processing.

An embodiment of this application further provides a computer-readable storage medium. The computer-readable storage medium stores computer instructions used to implement the methods performed by the network device (for example, network elements) in the foregoing method embodiments.

For example, when a computer program is executed by a computer, the computer is enabled to implement the methods performed by the network device in the foregoing method embodiments.

An embodiment of this application further provides a computer program product including instructions. When the instructions are executed by a computer, the computer is enabled to implement the methods performed by the network device (for example, network elements) in the foregoing method embodiments.

For explanations and beneficial effects of related content of any one of the apparatuses provided above, refer to the corresponding method embodiments provided above. Details are not described herein again.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, or another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a session management network element, a first rule, wherein the first rule comprises a quality of service QoS parameter corresponding to a frame type of an application; and
sending, by the session management network element based on the first rule, first indication information to a user plane network element, wherein the first indication information indicates the user plane network element to determine, based on the frame type, a QoS flow identifier QFI corresponding to a data packet of the application, the data packet of the application is encapsulated in a first data packet, and the first data packet comprises the frame type.

2. The method according to claim 1, wherein the data packet of the application is transmitted through a first tunnel, the first data packet comprises a tunnel header of the first tunnel, and the tunnel header of the first tunnel comprises the frame type; and
that the first indication information indicates the user plane network element to determine, based on the frame type, the quality of service QoS flow identifier QFI corresponding to the data packet of the application comprises:
the first indication information indicates the user plane network element to determine the QFI based on the frame type in the tunnel header of the first tunnel.

3. The method according to claim 2, wherein that the first indication information indicates the user plane network element to determine, based on the frame type, the QoS flow identifier QFI corresponding to the data packet of the application comprises:
the first indication information indicates the user plane network element to determine the QFI based on an internet protocol IP header of the data packet of the application and the frame type; or
the first indication information indicates the user plane network element to determine the QFI based on an identifier of the first tunnel and the frame type, wherein the identifier of the first tunnel is comprised in the tunnel header of the first tunnel.

4. The method according to claim 2 or 3, wherein the method further comprises:
determining, by the session management network element, that the data packet of the application is to be sent to the user plane network element through the first tunnel.

5. The method according to claim 4, wherein the determining, by the session management network element, that the data packet of the application is to be sent to the user plane network element through the first tunnel comprises:
receiving, by the session management network element, second indication information from a policy control network element; and
determining, by the session management network element based on the second indication information, that the data packet of the application is to be sent to the user plane network element through the first tunnel; or
determining, by the session management network element based on configuration information, that the data packet of the application is to be sent to the user plane network element through the first tunnel.

6. The method according to claim 1, wherein the first data packet comprises an extension header, and the extension header comprises the frame type; and
that the first indication information indicates the user plane network element to determine, based on the frame type, the quality of service QoS flow identifier QFI corresponding to the data packet of the application comprises:
the first indication information indicates the user plane network element to determine the QFI based on the frame type in the extension header.

7. The method according to any one of claims 1 to 6, wherein the method further comprises:
determining, by the session management network element based on the QoS parameter corresponding to the frame type, the QFI corresponding to the frame type.

8. The method according to any one of claims 1 to 7, wherein the method further comprises:
sending, by the session management network element, third indication information to the user plane network element, wherein the third indication information indicates the user plane network element to send the data packet of the application through a second tunnel, and a tunnel header of the second tunnel comprises the QFI.

9. The method according to claim 8, wherein the first data packet further comprises frame information of a frame corresponding to the data packet of the application, the frame information comprises one or more of the frame type, fourth indication information, size information of the frame, or QoS requirement information of the frame, and the fourth indication information indicates the frame to which the data packet of the application belongs; and
the method further comprises:
sending, by the session management network element, fifth indication information to the user plane network element, wherein the fifth indication information indicates the user plane network element to comprise the frame information in the tunnel header of the second tunnel.

10. The method according to any one of claims 1 to 9, wherein the method further comprises:
sending, by the session management network element, sixth indication information to the user plane network element, wherein the sixth indication information indicates the user plane network element to establish a first tunnel; and
receiving, by the session management network element, information about the first tunnel from the user plane network element.

11. A communication method, comprising:
receiving, by a user plane network element, a first data packet, wherein the first data packet comprises a data packet of an application and a frame type corresponding to the data packet of the application; and
determining, by the user plane network element based on the frame type, a QoS flow identifier QFI corresponding to the data packet of the application.

12. The method according to claim 11, wherein the receiving, by the user plane network element, the first data packet comprises:
receiving, by the user plane network element, the first data packet through a first tunnel, wherein the first data packet comprises a tunnel header of the first tunnel, and the tunnel header of the first tunnel comprises the frame type; and
the determining, by the user plane network element based on the frame type, the QoS flow identifier QFI corresponding to the data packet of the application comprises:
determining, by the user plane network element based on the frame type in the tunnel header of the first tunnel, the QFI corresponding to the data packet of the application.

13. The method according to claim 12, wherein the determining, by the user plane network element based on the frame type, the QoS flow identifier QFI corresponding to the data packet of the application comprises:
determining, by the user plane network element based on an internet protocol IP header of the data packet of the application and the frame type, the QFI corresponding to the data packet; or
determining, by the user plane network element based on an identifier of the first tunnel and the frame type, the QFI corresponding to the data packet of the application, wherein the identifier of the first tunnel is comprised in the tunnel header of the first tunnel.

14. The method according to claim 11, wherein the frame type is comprised in an extension header of the first data packet, and the determining, by the user plane network element based on the frame type, the QoS flow identifier QFI corresponding to the data packet of the application comprises:
determining, by the user plane network element based on the frame type in the extension header, the QFI corresponding to the data packet of the application.

15. The method according to any one of claims 11 to 14, wherein the method further comprises:
sending, by the user plane network element, the data packet of the application through a second tunnel, wherein a tunnel header of the second tunnel comprises the QFI.

16. The method according to claim 5, wherein the first data packet further comprises frame information of a frame corresponding to the data packet of the application, the frame information comprises one or more of the frame type, fourth indication information, size information of the frame, or QoS requirement information of the frame, the fourth indication information indicates the frame to which the data packet of the application belongs, and the tunnel header of the second tunnel comprises the frame information.

17. The method according to any one of claims 11 to 16, wherein the method further comprises:
receiving, by the user plane network element, first indication information, wherein the first indication information indicates the user plane network element to determine the QFI based on the frame type in the tunnel header of the first tunnel or based on the frame type in the extension header.

18. The method according to claim 15 or 16, wherein the method further comprises:
receiving, by the user plane network element, third indication information, wherein the third indication information indicates the user plane network element to send the data packet of the application through the second tunnel, and the tunnel header of the second tunnel comprises the QFI.

19. The method according to claim 16, wherein the method further comprises:
receiving, by the user plane network element, fifth indication information, wherein the fifth indication information indicates the user plane network element to comprise the frame information in the tunnel header of the second tunnel.

20. A communication method, comprising:
receiving, by a session management network element, characteristic information of an application from an application function network element; and
sending, by the session management network element, the characteristic information of the application and seventh indication information to a user plane network element, wherein the seventh indication information indicates the user plane network element to determine, based on the characteristic information, a frame type corresponding to a data packet of the application.

21. The method according to claim 20, wherein the characteristic information comprises at least one of a sending rule of a frame of the application, a burst size of a frame of the application, an interval between frames of the application, IP header information of the application, an identifier of the application, or a type of the application.

22. The method according to claim 20 or 21, wherein the method further comprises:
receiving, by the session management network element, a QoS parameter corresponding to the frame type;
determining, by the session management network element based on the QoS parameter corresponding to the frame type, a QoS flow corresponding to the frame type; and
sending, by the session management network element, eighth indication information to the user plane network element, wherein the eighth indication information indicates the user plane network element to send, by using the QoS flow, a data packet corresponding to the frame type.

23. The method according to claim 22, wherein that the eighth indication information indicates the user plane network element to send, by using the QoS flow, the data packet corresponding to the frame type comprises:
the eighth indication information indicates the user plane network element to send, through a second tunnel, the data packet corresponding to the frame type, wherein the data packet is encapsulated in a second data packet, the second data packet further comprises a tunnel header of the second tunnel, the tunnel header of the second tunnel comprises frame information corresponding to the data packet and an identifier QFI of the QoS flow, the frame information comprises one or more of the frame type, ninth indication information, size information of a frame, and QoS requirement information of the frame, and the ninth indication information indicates the frame to which the data packet of the application belongs.

24. The method according to claim 23, wherein the method further comprises:
sending, by the session management network element, tenth indication information to the user plane network element, wherein the tenth indication information indicates the user plane network element to detect, based on the characteristic information, the frame to which the data packet of the application belongs.

25. A communication method, comprising:
receiving, by a user plane network element, characteristic information of an application and seventh indication information from a session management network element; and
determining, by the user plane network element based on the seventh indication information, a frame type corresponding to a data packet of the application, wherein the frame type is determined based on the characteristic information of the application.

26. The method according to claim 25, wherein the characteristic information comprises at least one of a sending rule of a frame of the application, a burst size of the application, an interval between frames of the application, IP header information of the application, an identifier of the application, or a type of the application.

27. The method according to claim 25 or 26, wherein the method further comprises:
determining, by the user plane network element based on the frame type of the application, a QoS flow corresponding to the frame type; and
sending, by the user plane network element by using the QoS flow, the data packet corresponding to the frame type.

28. The method according to claim 27, wherein the sending, by the user plane network element by using the QoS flow, the data packet corresponding to the frame type comprises:
sending, by the user plane network element through a second tunnel, the data packet corresponding to the frame type, wherein the data packet is encapsulated in a second data packet, the second data packet further comprises a tunnel header of the second tunnel, the tunnel header of the second tunnel comprises frame information corresponding to the data packet and an identifier QFI of the QoS flow, the frame information comprises one or more of the frame type, ninth indication information, size information of a frame, and QoS requirement information of the frame, and the ninth indication information indicates the frame to which the data packet of the application belongs.

29. The method according to any one of claims 25 to 28, wherein the method further comprises:
detecting, by the user plane network element based on the characteristic information, the frame to which the data packet of the application belongs; and
comprising, by the user plane network element, the information about the frame in the tunnel header of the second tunnel.

30. A communication system, wherein the communication system comprises a session management network element and a user plane network element, wherein
the session management network element is configured to: obtain a first rule, wherein the first rule comprises a quality of service QoS parameter corresponding to a frame type of an application; and send first indication information to the user plane network element based on the first rule, wherein the first indication information indicates the user plane network element to determine, based on the frame type, a QoS flow identifier QFI corresponding to a data packet of the application, the data packet of the application is encapsulated in a first data packet, and the first data packet comprises the frame type; and
the user plane network element is configured to receive the first indication information.

31. The system according to claim 30, wherein the system further comprises a policy control network element, and the policy control network element is configured to: receive information about the application, wherein the information about the application comprises the frame type corresponding to the application; and send, to the session management network element, the QoS parameter corresponding to the frame type.

32. The system according to claim 31, wherein the information about the application indicates to establish a first tunnel, and the first tunnel is configured to send the data packet of the application to the user plane network element; and
the policy control network element is further configured to send eleventh indication information to the session management network element, wherein the eleventh indication information indicates the session management network element to establish the first tunnel.

33. A communication system, comprising a session management network element and a user plane network element, wherein
the session management network element is configured to: send characteristic information of an application to the user plane network element; and send seventh indication information to the user plane network element, wherein the seventh indication information indicates the user plane network element to determine, based on the characteristic information, a frame type corresponding to a data packet of the application; and
the user plane network element is configured to determine, based on the characteristic information of the application, the frame type corresponding to the data packet of the application.

34. The system according to claim 33, wherein the system further comprises an application function network element, and the application function network element is configured to send the characteristic information of the application to the session management network element.

35. A communication apparatus, comprising modules configured to perform steps of the method according to any one of claims 1 to 10, any one of claims 11 to 19, any one of claims 20 to 24, or any one of claims 25 to 29.
